# EUROPEAN PATENT APPLICATION

(11) **EP 4 614 351 A1**
(43) Date of publication of application: **10.09.2025**
(21) Application number: 25159162.4
(22) Date of filing: 20.02.2025
(51) Int. Cl.: G06F 16/583

(54) **IMAGE PROCESSING APPARATUS, METHOD FOR CONTROLLING IMAGE PROCESSING APPARATUS, COMPUTER-READABLE STORAGE MEDIUM, AND COMPUTER PROGRAM**

(30) Priority: 05.03.2024 JP 2024033090
(71) Applicant: CANON KABUSHIKI KAISHA, Tokyo 146-8501 (JP)
(72) Inventor: KITSUNAI, Takahiro, Tokyo, 146-8501 (JP); SAMPEI, Takahiro, Tokyo, 146-8501 (JP); KOGURE, Takeshi, Tokyo, 146-8501 (JP); TSUIHIJI, Yuki, Tokyo, 146-8501 (JP)
(74) Representative: Canon Europe Limited

(57) **Abstract**

An image processing apparatus includes acquisition means (201, 300) configured to acquire an image file including a plurality of annotations, determination means (201, 1000) configured to determine a relevance between the plurality of annotations, and control means (201, 1002) configured to perform control to integrate annotations determined to be relevant by the determination means among the plurality of annotations into an integrated annotation and output the integrated annotation.

## Description

### BACKGROUND OF THE INVENTION

### Field of the Invention

The present invention relates to an image processing apparatus for processing an image file of an image captured by a camera or the like.

### Description of the Related Art

In recent years, artificial intelligence (AI) technologies, such as deep learning, have been used in various technical fields.

For example, existing digital still cameras and the like have a function of detecting a person's face from a captured image. Japanese Patent Laid-Open Publication No. 2015-99559 discloses a technique for accurately detecting and recognizing an animal such as a dog or a cat as well as a person.

There has also been proposed a technique for recording information on a detected object as an annotation in association with image data. It is also being considered to record, as an annotation, for example, information indicating the region of a detected object using a point, a rectangle, a circle, or the like.

Various standards are present for methods for recording an annotation in association with image data. Furthermore, a plurality of annotations conforming to different standards can be recorded even in one image format. Japanese Patent Laid-Open Publication No. 2023-173960 proposes a method for recording an annotation when an image is converted between different image formats.

Since the accuracy of subject detection varies between recording devices that record an annotation, such as a digital camera and image processing software in a personal computer (PC), the recording devices that have detected the same subject (object) do not record exactly identical annotations. For this reason, when a plurality of recording devices are used to record annotations in one image file, a plurality of different annotations may be recorded for the same subject (object).

### SUMMARY OF THE INVENTION

The present invention provides an image processing apparatus that allows a user to easily handle a plurality of annotations recorded in an image file.

The present invention in its first aspect provides an image processing apparatus as specified in claim 1. Optional features are specified in claims 2 to 10.

The present invention in its second aspect provides a method for controlling an image processing apparatus as specified in claim 11. Optional features of the second aspect are specified in or derivable from claims 2 to 10.

The present invention in its third aspect provides a computer-readable storage medium as specified in claim 12. Optional features of the third aspect are specified in or derivable from claims 2 to 10.

The present invention in its fourth aspect provides a program as specified in claim 13. Optional features of the fourth aspect are specified in or derivable from claims 2 to 10.

Further features of the present invention will become apparent from the following description of embodiments with reference to the attached drawings.

### BRIEF DESCRIPTION OF THE DRAWINGS

Fig. 1 is a block diagram illustrating an example configuration of a digital camera according to an embodiment.
Fig. 2 is a block diagram illustrating an example configuration of a PC according to an embodiment.
Fig. 3 is a block diagram illustrating a processing unit of the digital camera or the PC according to an embodiment.
Fig. 4 is a block diagram illustrating an example configuration of an image file according to an embodiment.
Figs. 5A and 5B are block diagrams illustrating example configurations of annotations according to an embodiment.
Figs. 6A and 6B are diagrams illustrating a specific example of the annotations according to the embodiment.
Fig. 7 is a block diagram illustrating the processing unit according to a first embodiment.
Fig. 8 is a flowchart illustrating an annotation integration process according to the first embodiment.
Fig. 9 illustrates an example of annotations before the annotation integration process according to the first embodiment is performed.
Fig. 10 illustrates an example of annotations after the annotation integration process according to the first embodiment is performed.
Fig. 11 is a block diagram illustrating the processing unit according to a second embodiment.
Figs. 12A and 12B illustrate examples of annotations of an image file according to the second embodiment.
Figs. 13A, 13B, 13C, 13D, 13E, and 13F illustrate display examples of annotations according to the second embodiment.
Fig. 14 is a flowchart illustrating a layer reconstruction process according to the second embodiment.
Fig. 15 is a flowchart illustrating an annotation inclusion relationship determination process in the layer reconstruction process according to the second embodiment.
Fig. 16 is a flowchart illustrating an addition process in the layer reconstruction process according to the second embodiment.
Figs. 17A, 17B, 17C, and 17D are diagrams illustrating annotations obtained when the layer reconstruction process according to the second embodiment is performed.
Figs. 18A, 18B, 18C, and 18D are diagrams illustrating annotations obtained when the layer reconstruction process according to the second embodiment is performed.
Fig. 19 illustrates a display example of annotations obtained when the layer reconstruction process according to the second embodiment is performed.
Fig. 20 is a flowchart illustrating an image display process according to a third embodiment.
Fig. 21 is a flowchart illustrating an annotation display process in the image display process according to the third embodiment.
Fig. 22 is a flowchart illustrating a modification of the image display process according to the third embodiment.
Figs. 23A, 23B, 23C, and 23D illustrate display examples of annotations according to the third embodiment.
Figs. 24A and 24B illustrate display examples of the annotations in enlarged view according to the third embodiment.
Figs. 25A and 25B are diagrams illustrating examples of annotations according to a fourth embodiment.
Fig. 26 is a block diagram illustrating the processing unit according to the fourth embodiment and a fifth embodiment.
Fig. 27 is a flowchart illustrating a sorting process according to the fourth embodiment.
Fig. 28 is a flowchart illustrating a method for determining a reference based on reliability in the sorting process according to the fourth embodiment.
Fig. 29 illustrates an example of annotations according to the fifth embodiment.
Fig. 30 is a flowchart illustrating a filtering process according to the fifth embodiment.
Fig. 31 is a flowchart illustrating a method for determining a reference based on reliability in the filtering process according to the fifth embodiment.

### DESCRIPTION OF THE EMBODIMENTS

Embodiments will be described in detail hereinafter with reference to the accompanying drawings. The following embodiments do not limit the claimed invention. While each embodiment describe below has multiple features. Not all of the multiple features are required for the invention, and each feature of an embodiment described below may be used in combination with a feature or features of another embodiment described below. Further, in the accompanying drawings and description, the same or similar components are denoted by the same reference numerals, and redundant descriptions thereof will be omitted.

### System Configuration

In the following description, a camera (imaging apparatus) and a PC (information processing apparatus) are provided as examples of an image processing apparatus. However, an image processing apparatus according to an embodiment of the present invention is not limited to the examples. An image processing apparatus according to an embodiment of the present invention may be any image processing apparatus that reads an image recorded on a recording device (recording medium) and displays the read image on a display device or outputs the read image as an image file. Examples of the image processing apparatus include a smartphone and a tablet PC.

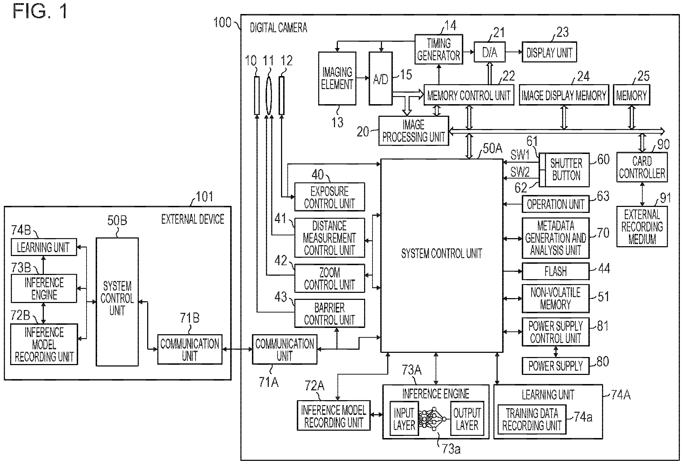

Fig. 1 is a block diagram illustrating an example configuration of a digital camera 100 according to an embodiment of the present invention.

A barrier 10 is a protective member that covers an imaging unit including an image capturing lens 11 of the digital camera 100 to protect the imaging unit against dirt or damage. The image capturing lens 11 forms an optical image on an imaging surface of an imaging element 13. A shutter 12 has an aperture function. The imaging element 13 converts the optical image formed on the imaging surface into an electrical signal. The imaging element 13 includes, for example, a charge-coupled device (CCD) element, a complementary metal oxide semiconductor (CMOS) element, or the like. An analog-to-digital (A/D) converter 15 converts an analog signal output from the imaging element 13 into a digital signal. The digital signal obtained by the A/D converter 15 through conversion is written to a memory 25 as so-called Raw image data. In addition, development parameters corresponding to respective pieces of Raw image data are generated based on information obtained during image capture, and are written to the memory 25. The development parameters include various parameters used in image processing for recording Joint Photographic Experts Group (JPEG) data or the like, such as exposure settings, white balance, color space, and contrast.

A timing generator 14 supplies a clock signal and a control signal to the imaging element 13, the A/D converter 15, and a digital-to-analog (D/A) converter 21. The timing generator 14 is controlled by a memory control unit 22 and a system control unit 50A. An image processing unit 20 performs various types of image processing, such as predetermined pixel interpolation processing, color conversion processing, correction processing, and resizing processing, on data from the A/D converter 15 or data from the memory control unit 22. The image processing unit 20 further performs predetermined image processing and arithmetic processing using captured image data, and provides obtained arithmetic results to the system control unit 50A. The system control unit 50A controls an exposure control unit 40 and a distance measurement control unit 41 based on the provided arithmetic results to implement autofocus (AF) processing, automatic exposure (AE) processing, and pre-flash (EF) processing.

The image processing unit 20 performs predetermined arithmetic processing using captured image data, and also performs auto white balance (AWB) processing based on obtained arithmetic results. Further, the image processing unit 20 reads an image stored in the memory 25 and performs compression such as lossless compression for uncompressed RAW data, and compression processing or decompression processing according to the JPEG, MPEG-4 Advanced Video Coding (AVC), or High Efficiency Video Coding (HEVC) standard. The image processing unit 20 writes the processed data to the memory 25.

The image processing unit 20 further performs predetermined arithmetic processing using captured image data and performs processes for editing various types of image data. Specifically, the image processing unit 20 can perform a cropping process for hiding an unnecessary peripheral part of the image data to adjust the display range and size of an image, and a resizing process for enlarging or shrinking the image data, elements displayed on the screen, or the like to change the size. In addition, the image processing unit 20 performs RAW development for applying image processing such as color conversion to data that has undergone compression processing such as lossless compression for uncompressed RAW data or decompression processing, and converting the resulting data into JPEG data to create image data. Further, the image processing unit 20 can implement a video cropping process for cropping a designated frame in a video format such as the MPEG-4 format and converting and storing the frame in JPEG format.

The image processing unit 20 also performs, for example, a process for superimposing, on display image data, an on-screen display (OSD) such as a menu or any characters to be displayed on a display unit 23 described below together with the display image data.

Further, the image processing unit 20 performs a subject detection process for detecting a subject present in input image data using the image data, information on the distance from the subject, which is obtained from the imaging element 13 or the like during image capture, and the like and detecting the region of the subject. Accordingly, information on the region, such as the position and size of the region in the image, and detection information such as tilt and certainty can be obtained as detectable information.

The memory control unit 22 controls the A/D converter 15, the timing generator 14, the image processing unit 20, an image display memory 24, the D/A converter 21, and the memory 25. The Raw image data generated through the A/D converter 15 is written to the image display memory 24 or the memory 25 via the image processing unit 20 and the memory control unit 22 or via the memory control unit 22 without the intervention of the image processing unit 20.

The image display memory 24, the D/A converter 21, and a thin-film transistor (TFT) liquid crystal display (LCD) constitute the display unit 23. The image data for display written in the image display memory 24 is displayed on the display unit 23 via the D/A converter 21. Sequentially displaying captured image data using the display unit 23 can implement an electronic finder function for displaying a live image. The memory 25 stores captured still images and moving images. The memory 25 has a storage capacity sufficient to store a predetermined number of still images and a predetermined time of moving images. The memory 25 can also be used as a work area of the system control unit 50A.

The exposure control unit 40 controls the shutter 12 having an aperture function. Further, the exposure control unit 40 has a flash dimming function by operating in conjunction with a flash 44. The distance measurement control unit 41 controls the focusing of the image capturing lens 11. A zoom control unit 42 controls the zooming of the image capturing lens 11. A barrier control unit 43 controls the operation of the barrier 10, which is a protective member. The flash 44 has an AF assist light projection function and a flash dimming function.

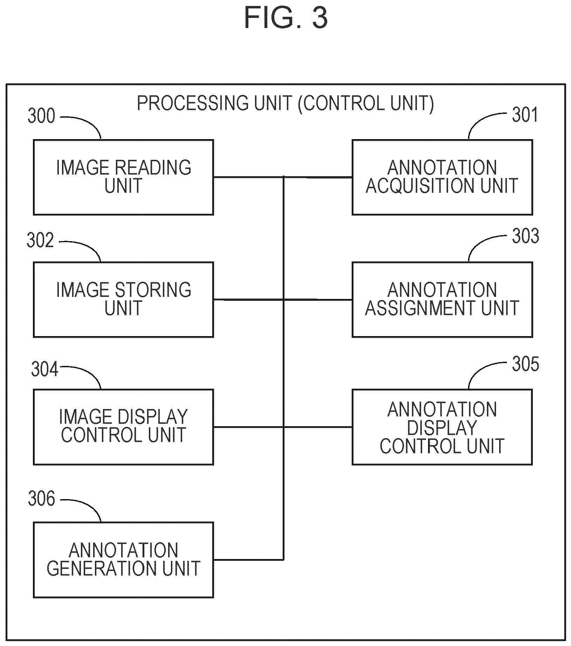

The system control unit 50A controls the entire digital camera 100. A non-volatile memory 51 is an electrically erasable and recordable non-volatile memory. Examples of the non-volatile memory 51 include an electrically erasable programmable read-only memory (EEPROM). The non-volatile memory 51 stores not only a program but also map information and the like. The system control unit 50A also functions as a processing unit that executes a process in accordance with the program stored in the non-volatile memory 51. The processing unit will be described in detail below with reference to Fig. 3.

A shutter switch 61 (SW1) is turned on when a shutter button 60 is operated halfway, and an instruction is issued to start an operation such as AF processing, AE processing, AWB processing, or EF processing. A shutter switch 62 (SW2) is turned on when the shutter button 60 is operated completely, and an instruction is issued to start a series of image capturing operations including an exposure process, a development process, and a recording process. In the exposure process, a signal read from the imaging element 13 is written to the memory 25 as Raw data via the A/D converter 15 and the memory control unit 22. In the development process, the Raw data written in the memory 25 is developed using calculations by the image processing unit 20 or the memory control unit 22, and is written to the memory 25 as image data. In the recording process, the image data is read from the memory 25 and compressed by the image processing unit 20. The compressed image data (image file) is stored in the memory 25 and then written to an external recording medium 91 via a card controller 90.

An operation unit 63 includes various buttons, a touch panel, and the like. The operation unit 63 includes, for example, a power button, a menu button, a mode switching switch for switching among modes, namely, an image capturing mode, a playback mode, and other special image capturing modes, a cross key, a set button, a macro button, and a multi-screen playback page break button. The operation unit 63 further includes, for example, a flash setting button, a button for switching among single shooting, continuous shooting, and self-timer shooting, a menu movement plus (+) button, a menu movement minus (-) button, a button for selecting image capturing quality, an exposure compensation button, a date/time setting button, and the like.

To record image data on the external recording medium 91 as an image file, a metadata generation and analysis unit 70 generates various kinds of metadata conforming to standards such as the Exchangeable image file (Exif) format for the image data, based on information obtained during image capture. Further, when the image data recorded on the external recording medium 91 is read, the metadata generation and analysis unit 70 analyzes metadata assigned to the image data. Examples of the metadata include image-capturing setting information regarding the settings at the time of image capture, image data information related to image data, subject recognition information (depth information, subject characteristics, etc.), and annotations. To record moving image data, the metadata generation and analysis unit 70 can generate metadata for the respective frames and assign the metadata to the moving image data. In the digital camera 100 according to the present embodiment, when the system control unit 50A performs an image capturing operation and records an image file, the metadata generation and analysis unit 70 generates the metadata as described above, and the system control unit 50A stores the metadata in a metadata recording area of the image file. Then, the system control unit 50A controls the card controller 90 to record the generated image file on the external recording medium 91.

A power supply 80 includes, for example, a primary battery such as an alkaline battery or a lithium battery, a secondary battery such as a NiCd battery, a NiMH battery, or a Li battery, and an alternating current (AC) adapter. A power supply control unit 81 supplies power supplied from the power supply 80 to each unit of the digital camera 100. The card controller 90 transmits and receives data to and from the external recording medium 91, such as a memory card. The external recording medium 91, examples of which include a memory card, stores an image (still image or moving image) captured by the digital camera 100.

An inference engine 73A performs inference on the image data input from the system control unit 50A using an inference model stored by an inference model recording unit 72A. The inference model may be an inference model externally input from an external device 101 or the like through a communication unit 71A and recorded in the inference model recording unit 72A, or an inference model that is retrained by a learning unit 74A described below. The inference engine 73A has a neural network design 73a.

The neural network design 73a includes an input layer, an output layer, and an intermediate layer (neurons) between the input layer and the output layer. The input layer receives image data input from the system control unit 50A. The intermediate layer includes several layers of neurons. The number of layers of neurons is determined appropriately by design, and the number of neurons in each layer is also appropriately determined by design. The intermediate layer is weighted based on the inference model recorded in the inference model recording unit 72A. The output layer outputs an annotation corresponding to an image input to the input layer.

The inference engine 73A can be updated from the external device 101 or the like, and can handle various inference models.

The learning unit 74A will be described. The learning unit 74A retrains the inference model in response to receipt of a request from the system control unit 50A or the like. The learning unit 74A includes a training data recording unit 74a. The training data recording unit 74a records therein information regarding training data for the inference engine 73A. The learning unit 74A can retrain the inference engine 73A using the training data recorded in the training data recording unit 74a and update the inference engine 73A using the inference model recording unit 72A.

The inference model recording unit 72A or the like manages management versions of inference models such that each inference model can be identified when the inference model is externally updated or retrained and updated by the learning unit 74A.

In the present embodiment, the inference engine 73A performs inference using a neural network. However, any method that can classify, infer, and analyze a subject included in an image may be used.

The communication unit 71A has a communication circuit for performing transmission and reception. The transmission and reception may be performed via either wireless communication, such as Wi-Fi or Bluetooth, or wired communication, such as Ethernet or Universal Serial Bus (USB). The communication unit 71A can communicate with a communication unit 71B of the external device 101. The communication unit 71A functions as a communication unit that transmits and receives not only an image file to which annotations created by the inference engine 73A are assigned but also various types of information such as an inference model and training data to and from the system control unit 50A and a system control unit 50B. The information to be transmitted can be limited depending on whether the external device 101 is associated with the digital camera 100.

The external device 101 includes a learning unit 74B, an inference engine 73B, an inference model recording unit 72B, the system control unit 50B, and the communication unit 71B. Alternatively, the external device 101 may be a device that does not include these components. The learning unit 74B creates an inference model in response to receipt of an external request from the inference engine 73B, the system control unit 50B, or the like. The inference model recording unit 72B records therein an inference model transmitted from the digital camera 100 and an inference model created by the learning unit 74B.

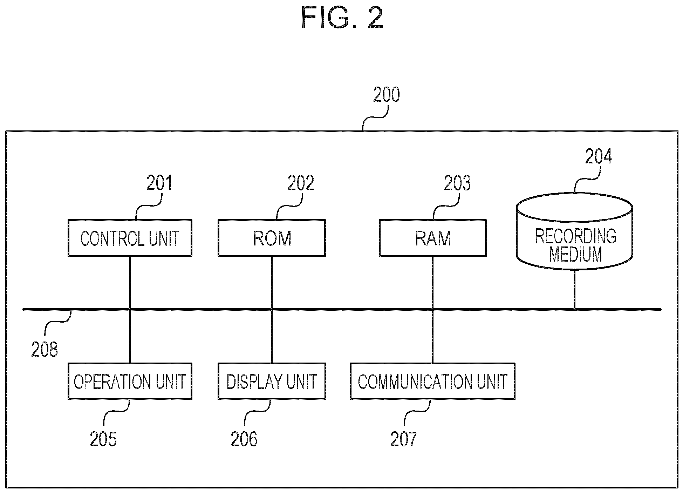

Fig. 2 is a block diagram illustrating an example configuration of a PC 200 according to an embodiment of the present invention.

A control unit 201 is, for example, a central processing unit (CPU), and controls the entire PC 200. The control unit 201 also functions as a processing unit that executes a process in accordance with a program stored in a read-only memory (ROM) 202. The processing unit will be described in detail below with reference to Fig. 3.

The ROM 202 stores a program and parameters in a non-transitory manner.

A random access memory (RAM) 203 temporarily stores a program and data supplied from an external device or the like.

A recording medium 204 is a hard disk or a flash memory fixedly installed in the PC 200, or a medium detachable from the PC 200, such as an optical disk, a magnetic card, an optical card, an integrated circuit (IC) card, or a memory card.

An operation unit 205 receives a user operation on the PC 200. The operation unit 205 has a function of selecting one of still images displayed on a display unit 206 and satisfying a predetermined condition in accordance with an operation performed by an editor. The user may perform an operation using an operation member provided in the PC 200, such as a button or a touch panel, or an operation member detachable from the PC 200, such as a keyboard or a mouse.

The display unit 206 displays data held by the PC 200, data supplied externally, or the like. The display unit 206 has a function of further displaying metadata assigned to an image recorded on the recording medium 204.

A communication unit 207 communicates with an external device such as the digital camera 100.

A system bus 208 communicably connects the components of the PC 200 to each other.

The PC 200 can communicate with the communication unit 71A of the digital camera 100 via the communication unit 207 to acquire an image file from the digital camera 100, and display the acquired image file on the display unit 206. Further, a new image file can be generated from the acquired image file by the control unit 201 and recorded on the recording medium 204. The acquisition of the image file may be performed not via the communication unit 207 but via the recording medium 204. Specifically, the external recording medium 91 storing an image file captured by the digital camera 100 may be attached to the PC 200 as the recording medium 204.

Fig. 3 is a block diagram illustrating a configuration of the processing unit included in the system control unit 50A of the digital camera 100 and the processing unit included in the control unit 201 of the PC 200. That is to say that the processing unit illustrated in Fig. 3 is illustrative of one or both of the processing unit of the system control unit 50A of the digital camera 100 and the processing unit of the control unit 201 of the PC 200.

The system control unit 50A of the digital camera 100 and the control unit 201 of the PC 200 may also each function as a processing unit, Fig. 3 illustrating each, by loading a predetermined program or the like stored in the non-volatile memory 51 and the ROM 202 into working RAMs, respectively, and executing the program. Units 300 to 306 included in the processing unit (the system control unit 50A or the control unit 201) will be described.

An image reading unit 300 reads an image file from a storage medium and acquires the image file. The image file may be acquired via the communication unit 71A or 207.

An annotation acquisition unit 301 acquires, from the image file read by the image reading unit 300, an annotation recorded in the image file.

An image storing unit 302 performs a process for storing (recording) an image file generated by the processing unit in a storage medium.

An annotation assignment unit 303 assigns an annotation to an image file newly stored in the storage medium by the image storing unit 302. In the present embodiment, an annotation to be assigned is recorded in a metadata area of the image file. However, the annotation may be recorded as a separate file related to the image file.

An image display control unit 304 performs a process for displaying image data of the image file read by the image reading unit 300 or the image file generated by the processing unit on the display unit 23 or 206.

An annotation display control unit 305 performs a process for displaying the annotation acquired by the annotation acquisition unit 301 or the annotation to be assigned to the image file by the annotation assignment unit 303 on the display unit 23 or 206. In combination with the image display control unit 304, the annotation display control unit 305 may display the image data of the image file and the annotation on the display unit 23 or 206 in a superimposed manner or individually display the image data and the annotation on the display unit 23 or 206.

An annotation generation unit 306 detects a subject using the inference engine 73A or 73B in the digital camera 100 or a predetermined inference program in the PC 200, and generates an annotation. Since the digital camera 100 includes the metadata generation and analysis unit 70, the annotation generation unit 306 may be omitted, and the metadata generation and analysis unit 70 may generate metadata.

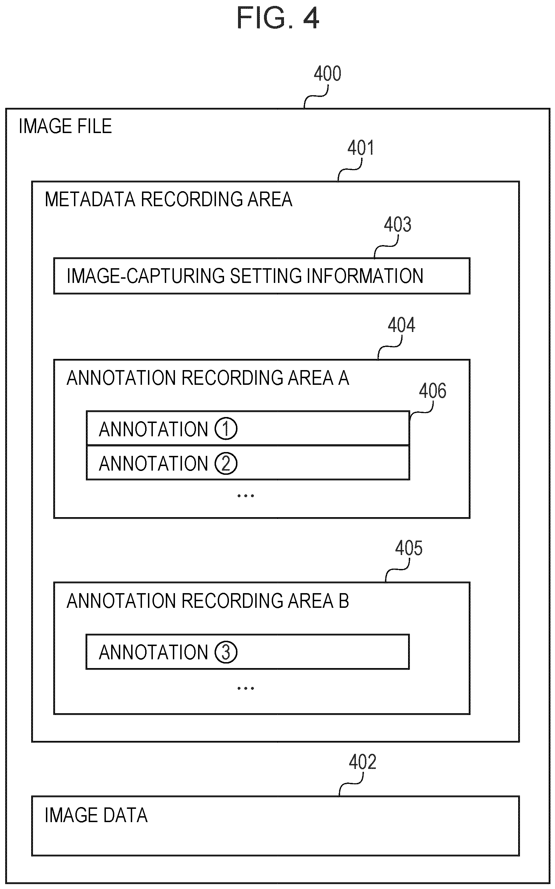

Fig. 4 is a block diagram illustrating an example configuration of an image file according to an embodiment of the present invention.

An image file 400 includes a metadata recording area 401 and an image area for storing image data 402.

The metadata recording area 401 includes image-capturing setting information 403, an annotation recording area A 404, and an annotation recording area B 405.

The image-capturing setting information 403 contains, for example, settings information recorded by the digital camera 100 at the time of image capture, image data information related to the image data 402, and subject recognition information.

The annotation recording area A 404 and the annotation recording area B 405 are areas for recording annotations. In the present embodiment, the annotations recorded in the annotation recording area A 404 and the annotation recording area B 405 are based on different standards.

The annotation recording area A 404 stores annotations 406 acquired when the digital camera 100 captures the image data 402. The annotation recording area B 405 stores annotations generated by the PC 200 or the like, rather than the digital camera 100, based on the image data 402 and the image-capturing setting information 403.

In the example configuration of the image file illustrated in Fig. 4, the annotation recording area A 404 and the annotation recording area B 405 are recorded in one metadata recording area 401. However, two metadata recording areas 401-1 and 401-2 may be provided, and the metadata recording area 401-1 may be an area for recording metadata using the digital camera 100 at the time of image capture. The metadata recording area 401-2 may be an area for recording information generated by the PC 200 or the like based on the image data 402 and the image-capturing setting information 403 after image capture. In that case, the metadata recording area 401-1 includes the image-capturing setting information 403 and the annotation recording area A 404, and the metadata recording area 401-2 includes the annotation recording area B 405.

The present embodiment provides a configuration for recording an annotation recorded by a camera and an annotation recorded by another device in different metadata recording areas, thereby making it possible to discriminate the annotation recorded by the camera. However, this configuration is not limiting. For example, each annotation may be assigned information on a device that has recorded the annotation to discriminate which device has recorded the annotation. That is to say that each device which makes or records an annotation may be identifiable through information, the information being information associated with or being used to discriminate or identify the device which made or records the annotation, and said information may be referred to as device information.

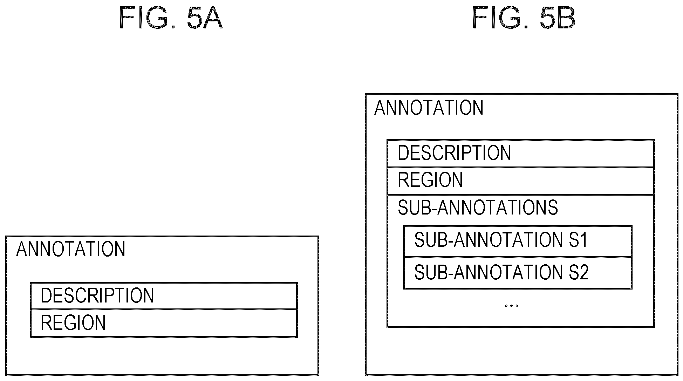

Figs. 5A and 5B are block diagrams illustrating example configurations of annotations according to an embodiment of the present invention. Each annotation includes annotation description information ("description") and annotation region information ("region"). The annotation description information is character string information of the annotation, and the annotation region information is coordinate and size information indicating a region in the image.

Fig. 5A illustrates an example configuration that does not have a layer structure (nested structure) and holds annotation description information and annotation region information.

Fig. 5B illustrates an example configuration that has a layer structure and holds sub-annotations, unlike the configuration illustrated in Fig. 5A, as described below. In Fig. 5B, a layer structure having one layer is illustrated as an example, but the number of layers in the layer structure is not limited. In Fig. 5B, each of sub-annotations S1 and S2 has annotation description information and annotation region information.

Regarding the configuration of annotations, whether each annotation can be recorded varies depending on, for example, the device that records the annotation, and the standard under which the annotation is recorded.

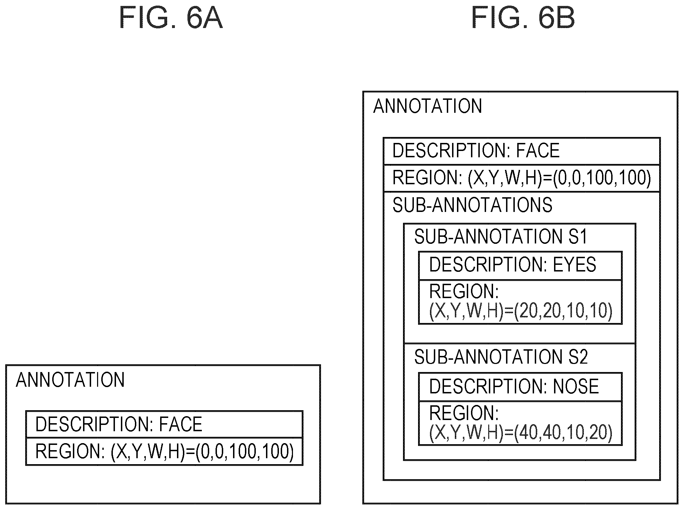

Figs. 6A and 6B are diagrams illustrating specific examples of the annotations illustrated in Figs. 5A and 5B, respectively.

In Fig. 6A, the description for the annotation is "face", and the region of the annotation is represented by a rectangle.

In Fig. 6B, as in Fig. 6A, the description for the annotation is "face", and the region of the annotation is represented by a rectangle. In addition, the annotations for which the descriptions are "eyes" and "nose" are held in a layer structure.

The regions of the annotations may be recorded as, instead of rectangles, various shapes such as polygons and circles. Furthermore, the information to be recorded as each annotation is not limited to that in the example described above, and various types of related information such as the device that has generated the annotation, the reliability of the annotation, and the recording date and time of the annotation may be recorded.

### First Embodiment

A series of operations according to a first embodiment of the present invention will be described as being performed by the PC 200, as an example, although the series of operation can be performed by the digital camera 100.

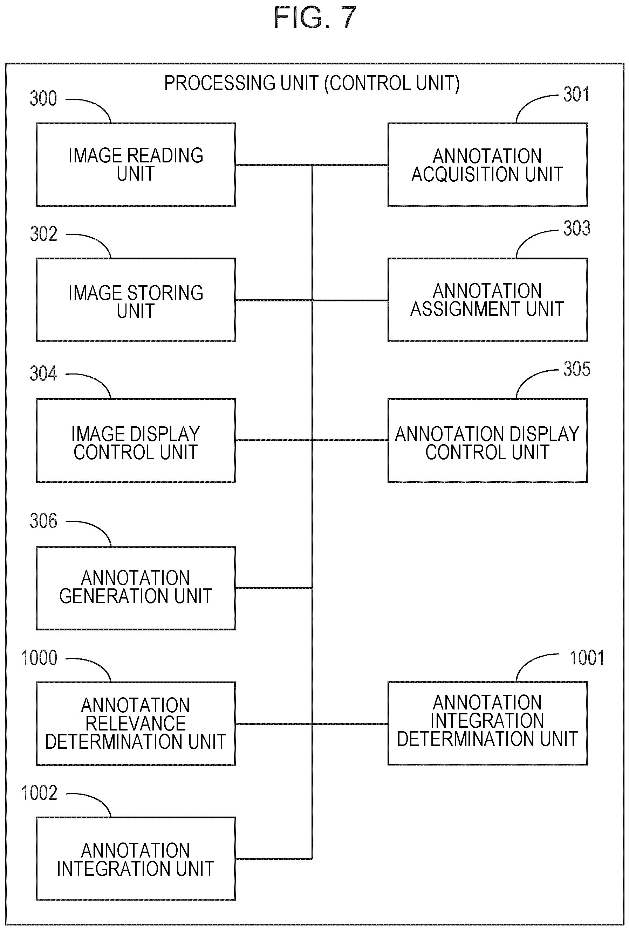

Fig. 7 is a diagram illustrating the processing unit included in the PC 200 according to the first embodiment of the present invention.

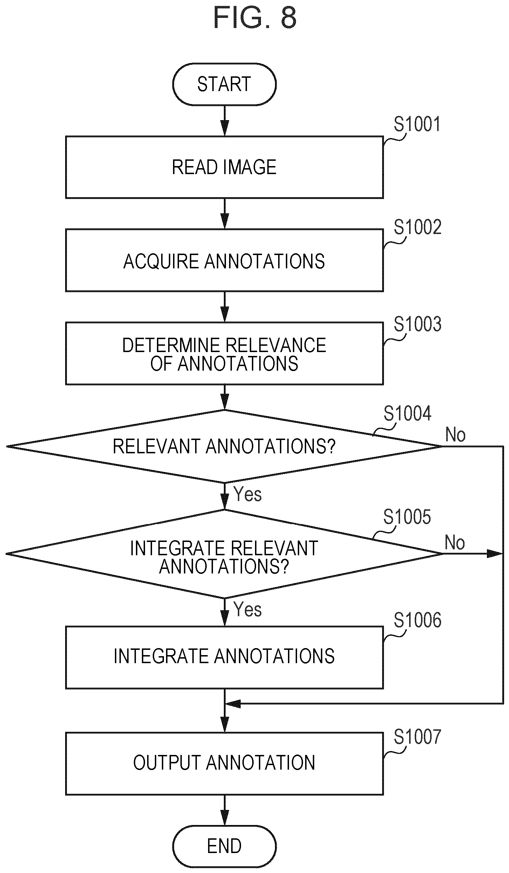

The control unit 201 (processing unit) of the PC 200 further includes units 1000 to 1002 illustrated in Fig. 7 in addition to the units illustrated in Fig. 3. The control unit 201 of the PC 200 functions as a processing unit including the units illustrated in Figs. 3 and 7 by loading a predetermined program or the like stored in the ROM 202 into a working RAM and executing the program. A flowchart illustrated in Fig. 8 is implemented by the control unit (processing unit) controlling the units illustrated in Fig. 7 and the units of the PC 200 illustrated in Fig. 2 in accordance with a program read by the control unit 201 (processing unit). When the operations according to the present embodiment are performed by the digital camera 100, the system control unit 50A of the digital camera 100 includes the processing unit illustrated in Fig. 7.

An annotation relevance determination unit 1000 determines whether a plurality of annotations are relevant, based on information included in the annotations. In the present embodiment, it is determined that a plurality of annotations are relevant when the following conditions are satisfied: the annotations have the same description; and the regions indicated by the annotations overlap by 50% or more (overlap by an amount greater than or equal to a threshold or by an amount greater than or equal to a predetermined value). That is to say that it is determined that a plurality of annotations are relevant when at least one of the following conditions is satisfied: there are matching, i.e. the same, descriptions for annotations in the plurality of annotations; and regions indicated by the annotations overlap.

In the present embodiment, the two conditions described above are used. However, it may be determined that annotations are relevant if the descriptions of the annotations do not include the same character string information. For example, differences in language, such as "human" in English and "hito" in Japanese (meaning "human"), differences in expression, such as "person" and "human", differences in the granularity of expression, such as "person" and "male", and the like may also be taken into consideration, and the degree of similarity between the descriptions may be calculated for determination. For example, it is determined that the mouth, eyes, ears, and the like are relevant to the face. It may be determined that a plurality of annotations having a layer structure (see, for example, Fig. 6B) are relevant, without using the descriptions of the annotations. Further, the threshold for the degree of overlap of the regions may be changed according to the situation. For example, in a case where the regions have a size smaller than the threshold, it may be determined that the annotations are relevant when the regions overlap by 80% or more. **In** a case where the regions have a size larger than the threshold, it may be determined that the annotations are relevant when the regions overlap by 50% or more. Further, the threshold for determining that the regions overlap may be changed according to the descriptions of the annotations. For example, annotations having the same description may be determined to be relevant when the regions overlap by 70%, and, for annotations having different descriptions, the threshold for the overlap determination may be changed. The threshold for the overlap determination may be changed according to the relevance of the descriptions. For example, for the mouth, a proportion of 80% to the face is set as the threshold for the overlap determination. For the eyes, a proportion of 80% to the face is set as the threshold for the overlap determination. For the ears, a proportion of 5% to the face is set as the threshold for the overlap determination. In addition, annotations (e.g., the face and the ears) for which the descriptions are relevant but the regions are likely not to overlap may be determined to be relevant even when the regions do not overlap.

An annotation integration determination unit 1001 determines whether to integrate relevant annotations, by using the result obtained by the annotation relevance determination unit 1000, for example. In the present embodiment, it is determined to integrate the annotations when the following condition is satisfied, in addition to the condition that the annotation relevance determination unit 1000 determines that the annotations are relevant: the annotations are recorded in different recording areas.

In a case where annotations are recorded in different recording areas, duplicate recording is more likely to occur than in a case where the annotations are recorded in the same recording area. Thus, the above condition is set in the present embodiment.

However, this condition is not essential, and it may be determined to integrate annotations recorded in the same recording area. The integration of annotations may be determined using information recorded in the image other than the annotations. For example, in a case where annotations have a layer structure, the integration of sub-annotations may be determined in consideration of the determination of the integration of the respective "parent" annotations.

An annotation integration unit 1002 integrates annotations determined to be integrated by the annotation integration determination unit 1001.

In the present embodiment, the annotations determined to be integrated by the annotation relevance determination unit 1000 are integrated as follows.
Case where annotations have the same description

The description of the integrated annotation is set to be the description of the annotations to be integrated, and the region of the integrated annotation is set to include all the regions indicated by the regions of the annotations to be integrated.
Case where descriptions of annotations are not the same, but are determined to be relevant

When the annotations are different in language, the description of the integrated annotation is set to be the description of the annotation in a specific language. When the annotations are different in the granularity of expression, the description of the integrated annotation is set to be the description of the annotation having a larger granularity. For example, when it is determined that the face and the eyes are relevant, the description of the integrated annotation is set to be "face". The region of the integrated annotation is set to include all the regions indicated by the regions of the annotations to be integrated.
Case where annotations have layer structure

The description of the integrated annotation is set to be the description of the annotation at the top (parent) of the layer structure, and the region of the integrated annotation is set to be the region of the annotation at the top (parent) of the layer structure or is set to include all the regions indicated by the regions of the annotations to be integrated.

In the present embodiment, the region of the integrated annotation includes all the regions of the annotations to be integrated. However, the region of the integrated annotation may include only an overlapping region, and various methods are available.

As a result, the annotations are integrated, and a new annotation is generated. The annotation integration unit 1002 outputs the integrated annotation and an annotation determined not to be integrated to the annotation display control unit 305 as annotations of the image data.

Fig. 8 is a flowchart illustrating the operation procedure of an annotation integration process according to the first embodiment.

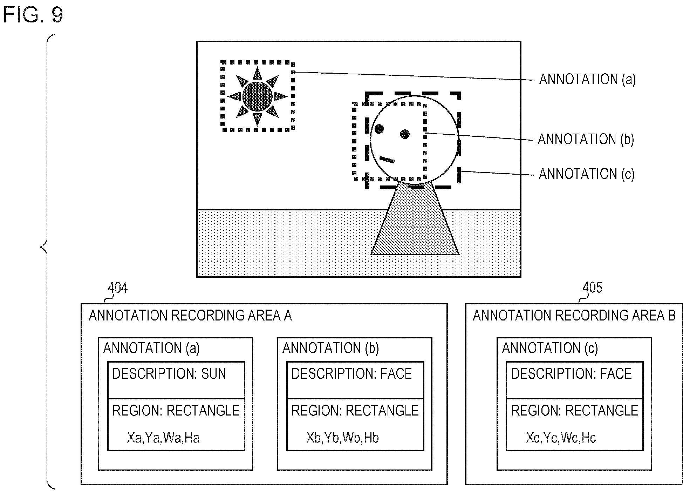

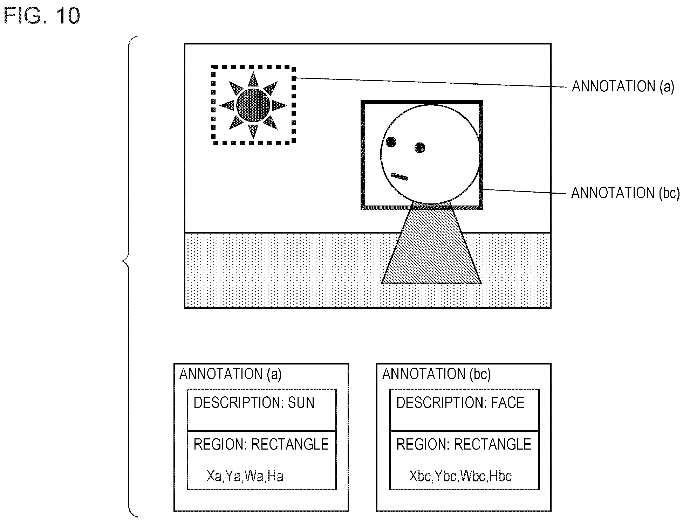

Figs. 9 and 10 illustrate specific examples of annotations used in the description of the flowchart illustrated in Fig. 8.

In step S1001, the image reading unit 300 reads an image file.

In step S1002, the annotation acquisition unit 301 acquires annotations recorded in the image file read in step S1001.

A description will be given of an example in which three annotations are acquired, as illustrated in Fig. 9. Specifically, annotations (a) and (b) are acquired from the annotation recording area A 404, and an annotation (c) is acquired from the annotation recording area B 405.

In step S1003, the annotation relevance determination unit 1000 determines the relevance of the annotations acquired in step S1002.

In a case where the annotations as illustrated in Fig. 9 are acquired, the annotation relevance determination unit 1000 determines that the annotations (b) and (c) for which the descriptions are the same, namely, "face", and the regions overlap are relevant.

In step S1004, the annotation relevance determination unit 1000 determines whether relevant annotations are present in the result of the determination in step S1003, and the process is branched. If relevant annotations are present, the process proceeds to step S1005, and if not, the process proceeds to step S1007.

In the annotation recording area A 404 and the annotation recording area B 405 illustrated in Fig. 9, it is determined that the annotations (b) and (c) are relevant, and thus the process proceeds to step S1005.

In step S1005, the annotation integration determination unit 1001 determines whether to integrate the annotations determined to be relevant, and the process is branched. If the annotations are to be integrated, the process proceeds to step S1006, and if not, the process proceeds to step S1007.

In the annotation recording area A 404 and the annotation recording area B 405 illustrated in Fig. 9, the annotations (b) and (c) are recorded in different annotation recording areas, and thus are determined to be "integrated". Then, the process proceeds to step S1006.

In step S1006, the annotation integration unit 1002 integrates the annotations determined to be integrated, and generates a new annotation. Then, the annotation integration unit 1002 outputs an annotation that is not determined to be integrated (or that is determined not to be integrated) and the new annotation, which is generated by integration, to the annotation display control unit 305.

In the example illustrated in Fig. 9, the annotations (b) and (c) are integrated, and a new annotation (bc) illustrated in Fig. 10 is generated. Then, the annotation (a) and the annotation (bc) are output as annotations of the image data.

In step S1007, the annotation display control unit 305 displays the annotations on the display unit 206 of the PC 200. At this time, the image display control unit 304 is also used to simultaneously display the image and the annotations on the display unit 206, as illustrated in Fig. 10. The annotation display control unit 305 may acquire information on the integrated annotation from the annotation integration unit 1002, and display the integrated annotation and an annotation that is not integrated in different display forms. For example, such annotations may be displayed with frames of different colors, frames having different thicknesses, different frame lines (such as a broken-line frame and a double-line frame), or the like.

Instead of display of the annotations, the annotation assignment unit 303 may replace the image file acquired in step S1001 with the annotations output from the annotation integration unit 1002 to generate a new image file. At that time, the image storing unit 302 is used to store the generated image file on a recording medium.

Through the procedure described above, relevant annotations are integrated and output (displayed or stored, for example). Accordingly, it is possible to improve visibility of annotations to be displayed and simplify annotations to be stored in the image.

### Second Embodiment

A series of operations according to a second embodiment of the present invention will be described as being performed by the digital camera 100 although the series of operation can be performed by the PC 200. That is to say that the second embodiment including the additional features, elements, units and the like may be part of and/or performed by the PC. Put another way while the second embodiment is described with reference to the digital camera, it should be understood that it applies to the PC 200. Since the configuration of the digital camera 100 is basically the same as that in the first embodiment, a description thereof will be omitted.

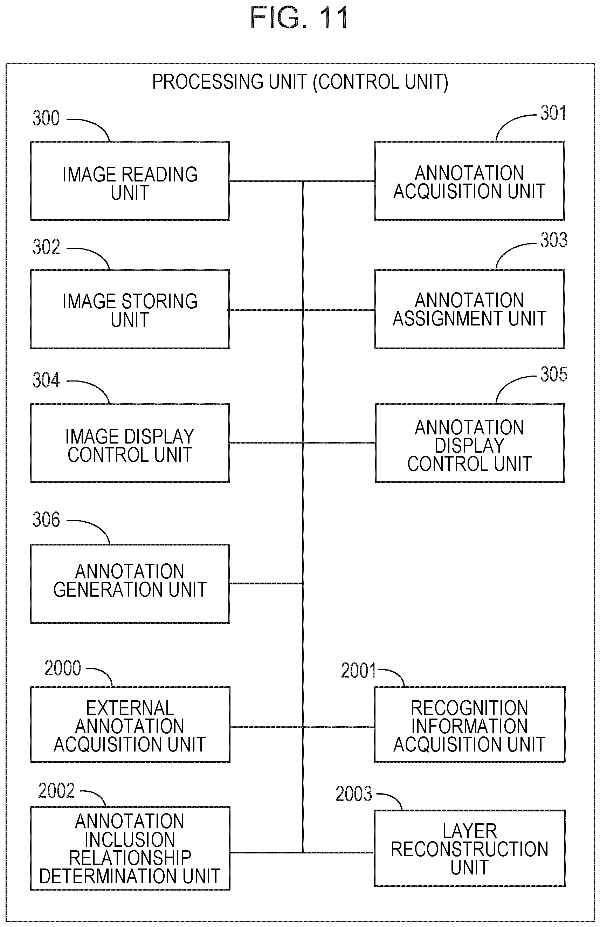

Fig. 11 is a diagram illustrating the processing unit included in the digital camera 100 according to the second embodiment of the present invention. The digital camera 100 further includes units 2000 to 2003 illustrated in Fig. 11 in addition to the units illustrated in Fig. 3. The units illustrated in Fig. 11 may be configured such that the processes of a plurality of units are performed by one unit.

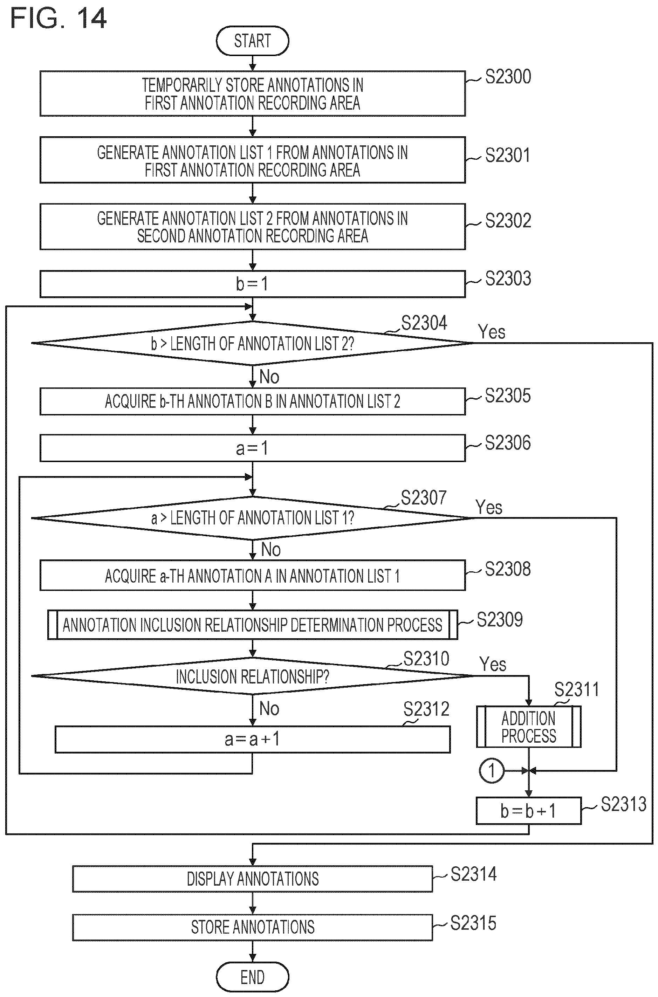

The system control unit 50A of the digital camera 100 can function as a processing unit including the units illustrated in Fig. 11 by loading a predetermined program or the like stored in the non-volatile memory 51 into a working RAM and executing the program. Flowcharts illustrated in Figs. 14 to 16 are implemented by the system control unit 50A (processing unit) of the digital camera 100 controlling the units illustrated in Fig. 11 and the units of the digital camera 100 illustrated in Fig. 1 in accordance with a program read by the system control unit 50A (processing unit).

An external annotation acquisition unit 2000 reads, from the external recording medium 91, annotations recorded in an external file associated with the image file read by the image reading unit 300.

A recognition information acquisition unit 2001 acquires the subject recognition information recorded in the image-capturing setting information 403 in the image file read by the image reading unit 300. The subject recognition information includes, for example, depth information.

An annotation inclusion relationship determination unit 2002 determines, based on the subject recognition information and region information in the annotations conforming to a plurality of standards, the inclusion relationship of the annotations.

A layer reconstruction unit 2003 reconstructs the layer structure of the annotations based on the inclusion relationship determined by the annotation inclusion relationship determination unit 2002.

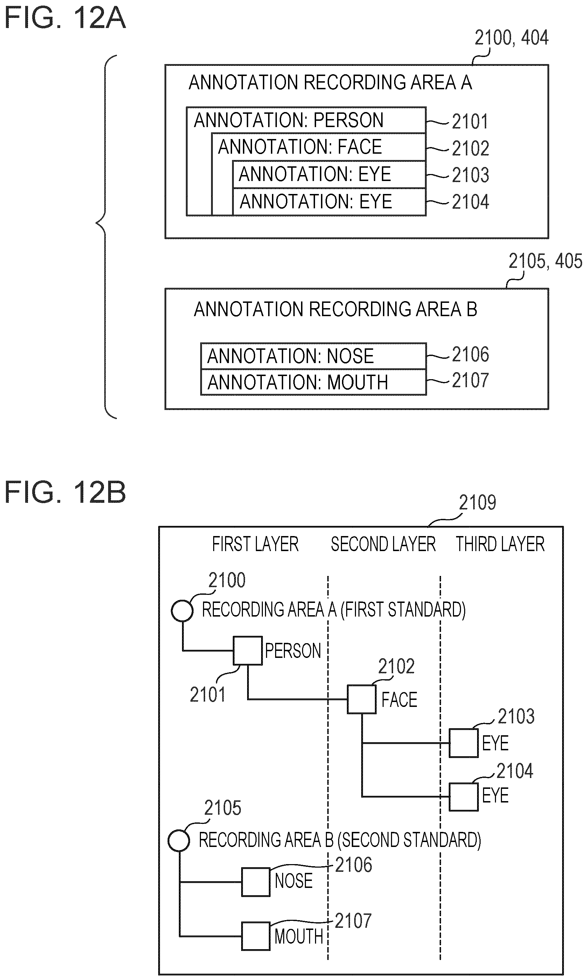

Fig. 12A is a diagram illustrating an example of annotations included in an image file. Fig. 12B is a diagram focusing on the layer structure of the annotations illustrated in Fig. 12A. As illustrated in Fig. 4, each of metadata recording areas conforming to different standards (the annotation recording areas A and B) stores annotations. That is, annotations in different recording formats are recorded in respective different recording areas. While the respective pieces of annotation region information are not illustrated and the respective pieces of annotation description information are illustrated in Figs. 12A and 12B, each annotation actually includes description information and region information.

As illustrated in Fig. 12A, in an annotation recording area A 2100 (corresponding to the annotation recording area A 404 illustrated in Fig. 4) in the image file, annotations are recorded in a way conforming to a first standard. In an annotation recording area B 2105 (corresponding to the annotation recording area B 405 illustrated in Fig. 4) in the image file, annotations are recorded in a way conforming to a second standard.

In the example illustrated in Fig. 12A, the annotation recording area A 2100 contains annotations in a hierarchical structure. A first layer, which is the top layer, contains an annotation 2101 (description = "person"). A layer below the annotation 2101 contains an annotation 2102 (description = "face"). A layer below the annotation 2102 contains an annotation 2103 (description = "eye") and an annotation 2104 (description = "eye").

In Fig. 12B, as indicated by reference numeral 2109, squares connected to a circle (2100) corresponding to the annotation recording area A (first standard) and squares connected to a circle (2105) corresponding to the annotation recording area B (second standard) indicate the annotations recorded in the respective annotation recording areas. The annotations (2101, 2106, and 2107) directly connected to the circles 2100 and 2105 are annotations in the first layer. The annotation 2102 connected from the annotation 2101 in the first layer is an annotation in a second layer. The annotations 2103 and 2104 connected from the annotation 2102 in the second layer are annotations in a third layer. Each annotation has description information that describes what the annotation indicates, and region information that indicates in which region in the image the annotation is. Here, the annotations conforming to the first standard recorded in the annotation recording area A are annotations recorded by the digital camera 100. The annotations in the annotation recording area B (the second standard) are annotations recorded by any annotation assignment device other than the digital camera 100.

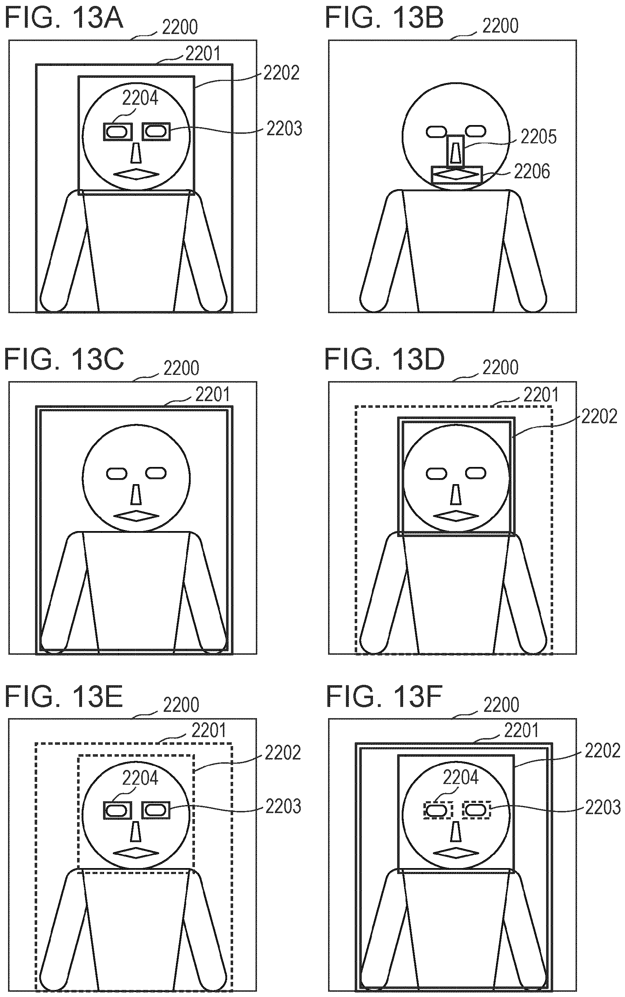

Figs. 13A to 13F illustrate display examples of an image 2200 of the image file read by the image reading unit 300 when the image 2200 is displayed on the display unit 23 by the image display control unit 304 such that the annotations illustrated in Figs. 12A and 12B are superimposed on the image 2200 by the annotation display control unit 305. In Figs. 13A to 13F, rectangles 2201 to 2204, 2205, and 2206 indicate regions corresponding to the annotations 2101 to 2104, 2106, and 2107 illustrated in Figs. 12A and 12B, respectively. The rectangle 2201 represents a frame indicating the region of the annotation 2101. The rectangle 2202 represents a frame indicating the region of the annotation 2102. The rectangles 2203 and 2204 represent frames indicating the regions of the annotations 2103 and 2104, respectively. The rectangle 2205 represents a frame indicating the region of the annotation 2106. The rectangle 2206 represents a frame indicating the region of the annotation 2107. While Figs. 13A to 13F illustrate an example in which a frame indicating the region of an annotation is displayed as the annotation, the description of the annotation may be displayed together with the region.

Fig. 13A illustrates a display example in which the annotations 2100 recorded in the annotation recording area A 404 are displayed. In Fig. 13A, as an example, the annotations in all of the layers recorded in the annotation recording area A are displayed by the annotation display control unit 305. Thus, the regions 2201 to 2204 respectively corresponding to the annotations 2101 to 2104 are displayed.

Fig. 13B illustrates a display example in which the annotations 2105 recorded in the annotation recording area B 405 are displayed. In Fig. 13B, as an example, the annotations in all of the layers recorded in the annotation recording area B are displayed by the annotation display control unit 305. Thus, the regions 2205 and 2206 respectively corresponding to the annotations 2106 and 2107 are displayed.

When the annotation recording area A and the annotation recording area B display respective annotations, the annotation to be displayed can be switched in response to the user operating the operation unit 63. That is, the annotation display control unit 305 switches between the display modes illustrated in Figs. 13A and 13B in accordance with the operation of switching the annotation recording area (standard) to be displayed.

In Fig. 13A, all the annotations recorded in the annotation recording area A are superimposed on the image 2200 to allow the user to collectively check the recorded annotations. However, the amount of information is large, and the visibility of the image 2200 is low. Accordingly, the hierarchical structure of the annotations, as illustrated in Fig. 12A, may be used to display the annotations on a layer-by-layer basis.

Fig. 13C illustrates an example in which, of the annotations illustrated in Fig. 12A, only the region 2201 corresponding to the annotation 2101 in the first layer is displayed in a superimposed manner. The image 2200 illustrated in Fig. 13C has higher visibility than that in Fig. 13A. In Fig. 13C, the regions 2202, 2203, and 2204 corresponding to the annotations 2102 (face) and the annotations 2103 and 2104 (eyes) included in the annotation 2101 are not displayed. Accordingly, as illustrated in Fig. 13C, the region 2201 is displayed with a double-line frame to indicate the presence of annotations in layers lower than the annotation 2101 corresponding to the region 2201. In the present embodiment, a region is displayed with a double-line frame to indicate the presence of annotations in layers lower than the region. Such a region is displayed with a frame having a different display form (such as color, shape, or line type) from a frame of a normal region. When an operation of selecting a region (i.e., the region 2201) indicating the presence of annotations in layers lower than the region is performed through the operation unit 63, the annotation display control unit 305 performs control to display the annotations in the layers lower than the selected region 2201. Examples of the operation of selecting the region include a touch to the region, and selection of the region using a cross key or the like. In Fig. 13C, in response to an operation of selecting the region 2201, as illustrated in Fig. 13D, the region 2202 corresponding to the annotation 2102 in the layer immediately below the annotation 2101 corresponding to the region 2201 is displayed in a superimposed manner on the image 2200. Since the annotations 2103 and 2104 are present in a layer lower than the annotation 2102, the frame indicating the region 2202 is displayed as a double-line frame. The frame indicating the region 2201 is displayed with a dotted-line frame as illustrated in Fig. 13D, for example, to indicate that the region 2201 is in the higher layer. When the region in the higher layer displayed with the dotted-line frame is selected, the display of the region of the annotation in the lower layer may be hidden, and the frame indicating the selected region 2201 is displayed with a double-line frame. That is, the display illustrated in Fig. 13C may be presented again. In Fig. 13D, when the region 2202 displayed with the double-line frame is selected, as illustrated in Fig. 13E, the regions 2203 and 2204 respectively corresponding to the annotations 2103 and 2104 in the layer lower than the annotation 2102 corresponding to the selected region 2202 are displayed. In Fig. 13E, the regions 2203 and 2204 are displayed with single-line frames because of the absence of an annotation subordinated to the annotations 2103 and 2104. In Fig. 13E, the regions 2201 and 2202 corresponding to the annotations 2101 and 2102, which are ancestors (roots) of the annotations 2103 and 2104, are displayed with dotted-line frames. However, only the region corresponding to the annotation (parent) in the layer immediately above the annotations 2103 and 2104 may be displayed. This provides higher visibility of the annotations. Alternatively, as illustrated in Fig. 13F, the annotations 2100 (the annotations 2101 to 2104) may be displayed such that each layer is indicated by a frame having a different display form to make the hierarchical relationship of the annotations recognizable. Whether all the annotations in the regions are to be displayed in the manner illustrated in Fig. 13F or the annotations in some layers are to be displayed in the manner illustrated in Figs. 13C to 13E may be switched by menu setting or the like through the operation on the operation unit 63.

As described above, in the present embodiment, annotations having a hierarchical structure can be displayed on a layer-by-layer basis. In contrast, as illustrated in Figs. 12A and 12B, annotations recorded in the annotation recording areas A and B in different formats are not always recorded in the same hierarchical structure.

Accordingly, in the present embodiment, annotations recorded in different annotation recording areas of an image file are subjected to a hierarchical structure reconfiguration process (layer reconstruction process). Layer reconstruction enables all the annotations recorded in different annotation recording areas in the image file to be collectively displayed in a hierarchical manner.

Fig. 14 is a flowchart illustrating the operation procedure of the layer reconstruction process performed by the processing unit according to the second embodiment. The processing unit performs the following process on the image file 400 to be subjected to the layer reconstruction process. In the layer reconstruction process illustrated in Fig. 14, the annotation recording area A (404) is used as a reference, and the annotations in the annotation recording area B (405) are added to the annotations in the annotation recording area A (404) to perform layer reconstruction.

First, in step S2300, the processing unit reads the annotations from the annotation recording area A (404) by using the annotation acquisition unit 301, and temporarily holds the read annotations in the memory 25.

In step S2301, the annotation acquisition unit 301 reads the annotations from the annotation recording area A (404), and the layer reconstruction unit 2003 generates annotation list 1. The annotation list 1 is a list of annotations in hierarchical order, with the annotations arranged in order from lowest to highest. The list also includes an annotation in the parent layer.

In step S2302, the annotation acquisition unit 301 reads the annotations from the annotation recording area B (405), which is different from the recording area from which the annotations are read in step S2301. Then, the layer reconstruction unit 2003 generates annotation list 2 from the read annotations. The annotation list 2 is a list of annotations in hierarchical order, with the annotations arranged in order from lowest to highest. The list also includes an annotation in the parent layer, and an addition completion flag indicating whether an annotation has been added by the hierarchical structure reconfiguration process can also be held in the list. The external annotation acquisition unit 2000 may read annotations recorded in a separate file.

In step S2303, the layer reconstruction unit 2003 sets a variable b to 1. The variable b manages index numbers in the annotation list 2.

In step S2304, the layer reconstruction unit 2003 compares the length of the annotation list 2 with the variable b and checks whether the process has been performed on all the elements of the annotation list 2. If the process has been performed on all the elements of the annotation list 2, the process proceeds to step S2314. If not all of the elements have been subjected to the process, the process proceeds to step S2305.

In step S2305, the layer reconstruction unit 2003 acquires the b-th annotation in the annotation list 2 as an annotation B.

In step S2306, the layer reconstruction unit 2003 sets a variable a to 1. The variable a manages index numbers in the annotation list 1.

In step S2307, the layer reconstruction unit 2003 compares the length of the annotation list 1 with the variable a and checks whether the process has been performed on all the elements of the annotation list 1. If the process has been performed on all the elements of the annotation list 1, the process proceeds to step S2313. If not all of the elements have been subjected to the process, the process proceeds to step S2308.

In step S2308, the layer reconstruction unit 2003 acquires the a-th annotation in the annotation list 1 as an annotation A.

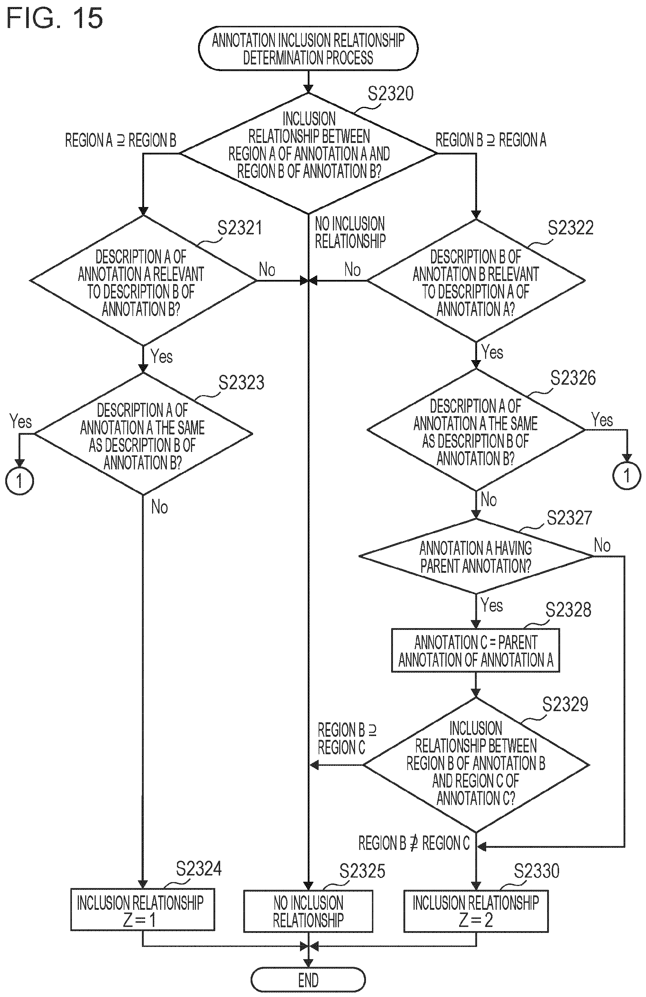

In step S2309, the annotation inclusion relationship determination unit 2002 determines whether the annotations A and B have an inclusion relationship. This annotation inclusion relationship determination process will be described in detail below with reference to Fig. 15.

If the annotation inclusion relationship determination unit 2002 determines in step S2310 that the annotations A and B have an inclusion relationship, the process proceeds to step S2311. If it is determined that the annotations A and B do not have an inclusion relationship, the process proceeds to step S2312.

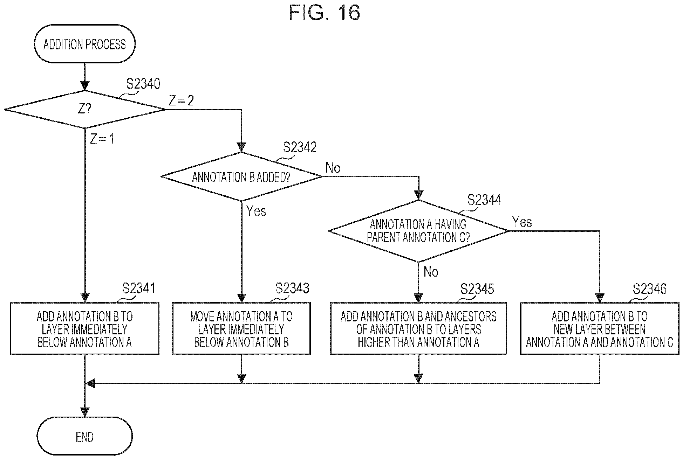

In step S2311, the layer reconstruction unit 2003 performs an addition process for adding the annotation B determined to have an inclusion relationship with the annotation A to the annotations temporarily held in the memory 25. This layer information assignment process will be described in detail below with reference to Fig. 16.

In step S2312, the layer reconstruction unit 2003 adds 1 to the variable a, and then the process returns to step S2307.

In step S2313, the layer reconstruction unit 2003 adds 1 to the variable b, and then the process returns to step S2304.

Through the processing of steps S2301 to S2313, the annotation inclusion relationship determination process (S2309) is performed on all the combinations of annotations in the annotation recording area A (404) and the annotation recording area B

(405). Then, if it is determined that the combination of annotations has an inclusion relationship, the addition process (S2311) is performed.

In step S2314, the annotation display control unit 305 displays, based on the annotations temporarily held in the memory 25, the annotations in a superimposed manner on the image. That is, the display is performed based on annotations obtained by adding the annotations in the annotation recording area B (405) to the annotations in the annotation recording area A (404) in consideration of the hierarchical relationship. The annotations are displayed such that, as described with reference to Figs. 13C to 13F, the annotations are displayed on a layer-by-layer basis in response to an operation on the operation unit 63.

In step S2315, the image storing unit 302 performs an annotation storing process for storing, in the image file 400, the annotations temporarily held in the memory 25. In the annotation storing process, more specifically, annotations obtained by adding the annotations in the annotation recording area B (405) to the annotations in the annotation recording area A (404) in consideration of the hierarchical relationship are recorded in the image file. The obtained annotations are different from the annotations assigned at the time of image capture by the digital camera 100, and thus are recorded in a new annotation recording area in the image file. Alternatively, the obtained annotations may be recorded in the annotation recording area B.

Fig. 15 is a flowchart illustrating the operation procedure of the annotation inclusion relationship determination process performed by the annotation inclusion relationship determination unit 2002 in step S2309.

In step S2320, the annotation inclusion relationship determination unit 2002 determines whether a region A of the annotation A and a region B of the annotation B have an inclusion relationship, based on information on the positions and sizes of the regions A and B. If the region A is larger than the region B and the region B is included in the region A, the process proceeds to step S2321. If the region B is larger than the region A and the region A is included in the region B, the process proceeds to step S2322. If none of the conditions is satisfied and the regions A and B do not have an inclusion relationship, the process proceeds to step S2325. In the determination of the inclusion relationship, one of the regions need not be completely included in the other, but may be included with margins. The amounts of the margins may be changed depending on the descriptions of the annotations.

In step S2321, the annotation inclusion relationship determination unit 2002 determines whether a description A of the annotation A is relevant to a description B of the annotation B such that the description A includes the description B. For example, when the description A is "face" and the description B is "nose", it is determined that the description A includes the description B. If it is determined that the description A includes the description B, the process proceeds to step S2323. If it is determined that the description A does not include the description B, the process proceeds to step S2325.

In step S2323, the annotation inclusion relationship determination unit 2002 determines whether the description A of the annotation A is the same as the description B of the annotation B. For example, the descriptions that are different in language, such as "human" in English and "hito" in Japanese (meaning "human"), are determined to be the same, and the descriptions that are different in expression, such as "person" and "human", are also determined to be the same. If it is determined that the description A is the same as the description B, an annotation having the same description is present, and the annotation B need not be added. Thus, the process proceeds to step S2313 in Fig. 14 and proceeds to the processing of the next annotation in the annotation list 2. If it is determined that the description A is not the same as the description B, the process proceeds to step S2324. If it is determined in step S2323 that the annotations A and B have the same description, as in the first embodiment, the region information of the annotation A and the region information of the annotation B may be integrated. In a case where the region information of the annotation A and the region information of the annotation B are to be integrated, the region information of the annotation A temporarily stored in the memory 25 is updated with the region information obtained as a result of the integration.

In step S2324, the annotation inclusion relationship determination unit 2002 determines that there is an inclusion relationship, and sets a variable Z for a method for an annotation addition process to 1. Then, the annotation inclusion relationship determination process ends. Then, the process proceeds to step S2310 in Fig. 14. In step S2325, the annotation inclusion relationship determination unit 2002 determines that there is no inclusion relationship. Then, the annotation inclusion relationship determination process ends. Then, the process proceeds to step S2310. In step S2322, the annotation inclusion relationship determination unit 2002 determines whether the description B of the annotation B includes the description A of the annotation A. For example, when the description B is "face" and the description A is "nose", it is determined that the description B includes the description A. If it is determined that the description B includes the description A, the process proceeds to step S2326. If it is determined that the description B does not include the description A, the process proceeds to step S2325.

In step S2326, as in step S2323, the annotation inclusion relationship determination unit 2002 determines whether the description A of the annotation A is the same as the description B of the annotation B. If it is determined that the description A is the same as the description B, an annotation having the same description is present, and the annotation B need not be added. Thus, the process proceeds to step S2313 and proceeds to the processing of the next annotation in the annotation list 2. If it is determined that the description A is not the same as the description B, the process proceeds to step S2327. If it is determined in step S2326 that the annotations A and B have the same description, as in the first embodiment, the region information of the annotation A and the region information of the annotation B may be integrated. In a case where the region information of the annotation A and the region information of the annotation B are to be integrated, the region information of the annotation A temporarily stored in the memory 25 is updated with the region information obtained as a result of the integration.

In step S2327, the annotation inclusion relationship determination unit 2002 determines whether the annotation A has a parent annotation (an annotation in the layer immediately above the annotation A). If the annotation A has a parent annotation, the process proceeds to step S2328, and if not, the process proceeds to step S2330.

In step S2328, the annotation inclusion relationship determination unit 2002 acquires the parent annotation of the annotation A (the annotation in the layer immediately above the annotation A) as an annotation C.

In step S2329, the annotation inclusion relationship determination unit 2002 determines whether the region B of the annotation B and a region C of the annotation C have an inclusion relationship, based on information on the positions and sizes of the regions B and C. The method for determining the inclusion relationship is similar to that in step S2320. If the region B is larger than the region C and the region C is included in the region B, the process proceeds to step S2325, and if not, the process proceeds to step S2330. If the region B is larger than the region C and the region C is included in the region B, it is desirable that the annotation B be added to, instead of the layer immediately above the annotation A, a higher layer. Accordingly, in step S2325, it is determined that there is no inclusion relationship although there is actually an inclusion relationship, and the process proceeds to the next processing so that, in the inclusion relationship determination process, it is determined that there is an inclusion relationship with an annotation in the layer higher than the annotation A, and an addition process is performed.

In step S2330, the annotation inclusion relationship determination unit 2002 determines that there is an inclusion relationship, and sets the variable Z for the method for the annotation addition process to 2. Then, the annotation inclusion relationship determination process ends. Then, the process proceeds to step S2310.

Fig. 16 is a flowchart illustrating the operation procedure of the addition process performed by the layer reconstruction unit 2003 in step S2311.

In step S2340, the layer reconstruction unit 2003 determines the variable Z. If the variable Z is 1, the process proceeds to step S2341. If the variable Z is 2, the process proceeds to step S2342.

In step S2341, the layer reconstruction unit 2003 adds the annotation B to the layer immediately below the annotation A among the annotations temporarily stored in the memory 25. The addition completion flag is set for the added annotation B.

In step S2342, the layer reconstruction unit 2003 determines whether the addition completion flag has been set for the annotation B. If the addition completion flag has been set, that is, if it is determined that the annotation B has been added to the memory 25, the process proceeds to step S2343. If it is determined that the annotation B has not been added to the memory 25, the process proceeds to step S2344.

In step S2343, the layer reconstruction unit 2003 moves the annotation A to the layer immediately below the annotation B among the annotations temporarily stored in the memory 25. If the annotation B is an annotation added as an ancestor with reference to an ancestor addition flag described below, the processing of step S2343 has already been performed. Thus, the processing of step S2343 is not performed.

In step S2344, the layer reconstruction unit 2003 determines whether the annotation A has the parent annotation C (in the layer immediately above the annotation A). If the annotation A has a parent annotation, the process proceeds to step S2346, and if not, the process proceeds to step S2345.

In step S2345, the layer reconstruction unit 2003 adds the annotation B to the layer immediately above the annotation A among the annotations temporarily stored in the memory 25. Further, if the annotation B has parent annotations, ancestor annotations of the annotation B are added to layers higher than the annotation A with the hierarchical structure maintained. The ancestor annotations are annotations that are parents tracing back to the root, such as a parent, a parent of the parent, and a parent of the parent of the parent, and do not include annotations that are children of the parent of the parent. The addition completion flag is set for the added annotation B and its ancestor annotations. The ancestor addition flag is set for the annotations added as the ancestors, and is used in step S2343.

In step S2346, the layer reconstruction unit 2003 adds a layer between the annotation A and the annotation C among the annotations temporarily stored in the memory 25, and adds the annotation B to the added layer. Then, the addition completion flag is set for the added annotation B.

As described above, the addition process is performed to add an annotation to the annotations temporarily held in the memory 25, and then, the process proceeds to step S2313 and proceeds to the processing of the next annotation in the annotation list 2.

As described above, in the present embodiment, the layer reconstruction process is performed in accordance with the inclusion relationship of the regions of annotations and the relevance of the descriptions of the annotations. However, this configuration is not limiting, and the inclusion relationship of annotations may be determined using, for example, the depth information acquired by the recognition information acquisition unit 2001 in addition to the inclusion relationship of the regions of the annotations and the relevance of the descriptions of the annotations. Even in a case where it is determined that annotations have an inclusion relationship using the regions and the descriptions of the annotations, if the annotations indicate greatly different depth information of the subject, it may be determined that the annotations have no inclusion relationship.

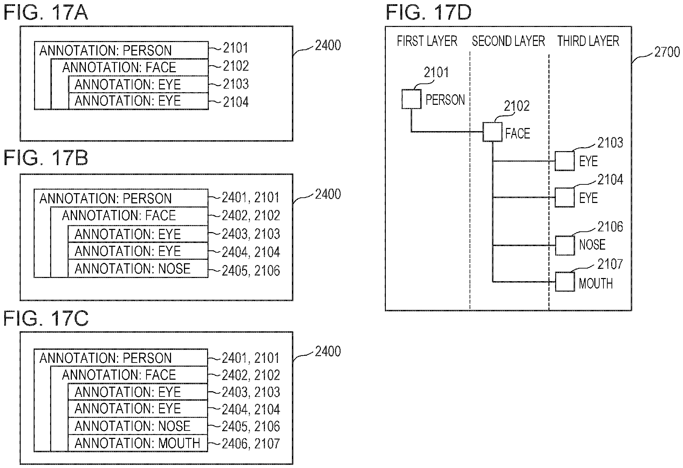

Figs. 17A to 17D are diagrams illustrating annotations obtained by performing the layer reconstruction process on the annotations illustrated in Figs. 12A and 12B.

First, in step S2300, the annotations in the annotation recording area A (2100) are temporarily recorded in the memory 25. Accordingly, as indicated by reference numeral 2400 in Fig. 17A, the annotations 2101 to 2104 are temporarily recorded in the memory 25 with the hierarchical structure maintained. Thereafter, the inclusion relationship determination process in step S2309 is performed on each of the annotations 2106 and 2107 in the annotation recording area B (2105) written in the annotation list 2, based on the information on the lower layer. The annotations 2106 and 2107 are in the same layer, and thus either of them may be subjected to the process first. Here, the annotation 2106 is subjected to the process first. It is determined that the annotation 2106 has no inclusion relationship with the annotations 2103 and 2104. Thereafter, the process for determining the inclusion relationship with the annotation 2102 in the layer immediately above the annotations 2103 and 2104 (S2309) is performed, and it is determined that the annotation 2106 has an inclusion relationship with the annotation 2102 and that the variable Z is 1. Then, in the addition process in step S2311, the annotation 2106 is added to the layer immediately below the annotation 2102 in the processing of step S2341. Accordingly, annotations 2401 to 2405 as illustrated in Fig. 17B are temporarily recorded in the memory 25. Thereafter, the process is performed on the annotation 2107 in a similar way, and the annotation 2107 (i.e., an annotation 2406) is added to the layer immediately below the annotation 2102, as illustrated in Fig. 17C. As described above, the annotations illustrated in Fig. 17C are generated through the layer reconstruction process.

Fig. 17D illustrates the hierarchical structure of the annotations illustrated in Fig. 17C. When the layer reconstruction process is performed on the annotations 2100 and the annotations 2105 illustrated in Figs. 12A and 12B by using the annotations 2100 as a reference, the annotations illustrated in Fig. 17C having a layer structure 2700 illustrated in Fig. 17D are generated.

In the present embodiment, the annotations in the annotation recording area B (405) are added to the annotations in the annotation recording area A (404) in consideration of the hierarchical relationship. Alternatively, the layer reconstruction process may be performed using the annotation recording area B (405) as a reference such that the annotations in the annotation recording area A (404) are added to the annotations in the annotation recording area B (405). In this case, the processes illustrated in Figs. 14 to 16 are performed by replacing the annotation recording area A and the annotation recording area B.

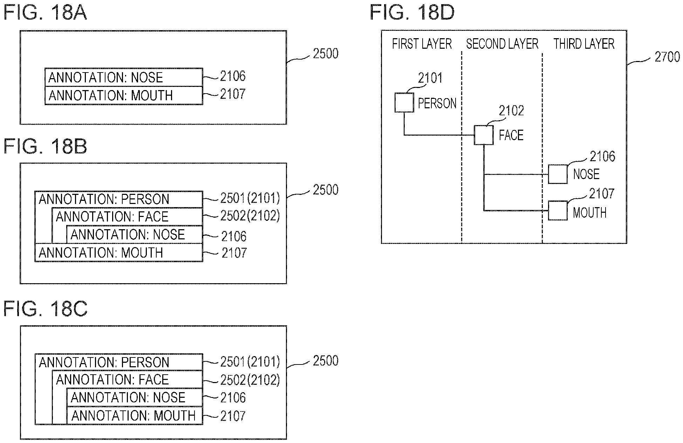

The layer reconstruction process to be performed on the annotations illustrated in Figs. 12A and 12B when the annotations in the annotation recording area A are added to the annotations in the annotation recording area B as a reference will be described with reference to Figs. 18A to 18D.

First, in step S2300, the annotations in the annotation recording area B (2105) are temporarily recorded in the memory 25. Accordingly, as indicated by reference numeral 2500 in Fig. 18A, the annotations 2106 and 2107 are temporarily recorded in the memory 25 with the hierarchical structure maintained. Thereafter, the inclusion relationship determination process in step S2309 is performed on the annotations 2101 to 2104 in the annotation recording area A (2100) written in the annotation list 1, based on the information on the lower layer. The annotations 2103 and 2104 are in the same layer, and thus either of them may be subjected to the process first. Since it is determined that the annotations 2103 and 2104 have no inclusion relationship with the annotations 2106 and 2107, the annotations 2103 and 2104 are not added to the memory 25. Next, in the inclusion relationship determination process (S2309), it is determined that the annotation 2102 has an inclusion relationship with the annotation 2106 and that the variable Z is 2. Then, in the addition process (S2311), it is determined that the annotation 2102 has not been added (No in step S2342) and that the annotation 2106 has no parent annotation (No in step S2344). Thus, in step S2345, as illustrated in Fig. 18B, the annotation 2102 (i.e., an annotation 2502) and the annotation 2101 (i.e., an annotation 2501), which is the parent (ancestor) of the annotation 2102, are added to the layer higher than the annotation 2106 with the hierarchical structure maintained. At this time, the annotation 2101 and the annotation 2102 are assigned the addition completion flag, and the annotation 2101 is further assigned the ancestor addition flag. Then, the addition completion flag is set for the annotation 2101 and the annotation 2102. Thereafter, in the inclusion relationship determination process (S2309), it is determined that the annotation 2102 has an inclusion relationship with the annotation 2107 and that the variable Z is 2. Then, in the addition process (S2311), it is determined that the annotation 2102 has been added (Yes in step S2342). Then, in step S2343, as illustrated in Fig. 18C, the annotation 2107 is moved to the layer immediately below the annotation 2102. Thereafter, the inclusion relationship determination process (S2309) is performed on the annotation 2101. Since the ancestor addition flag is set in the annotation 2101, the addition process (S2311) is not performed on the annotation 2101. In the inclusion relationship determination process (S2309), an annotation in which the ancestor addition flag is set may be determined to have no inclusion relationship. As described above, the annotations illustrated in Fig. 18C are generated through the layer reconstruction process.

Fig. 18D illustrates the hierarchical structure of the annotations illustrated in Fig. 18C. When the layer reconstruction process is performed on the annotations 2100 and the annotations 2105 illustrated in Figs. 12A and 12B by using the annotations 2105 as a reference, the annotations illustrated in Fig. 18C having a layer structure 2700 illustrated in Fig. 18D are generated.

Since the result of the layer reconstruction process changes depending on which annotation recording area is used as a reference, the user may be allowed to select which annotation recording area to use as a reference. Alternatively, it may be determined in which recording area to use the annotations as a reference, in accordance with the number of layers. For example, the layer reconstruction process may be performed using, as a reference, annotations having a large number of layers.

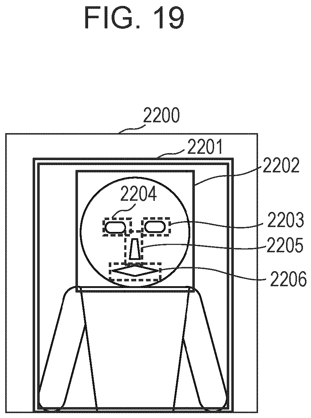

Fig. 19 illustrates an example in which, based on annotations as illustrated in Fig. 17C generated through the layer reconstruction process, the annotations are displayed with frames having display forms different for the respective layers. In Figs. 13A to 13F, the annotations are displayed in consideration of the layers only for the respective recording areas. However, the layer reconstruction process enables annotations in a plurality of recording areas to be collectively displayed in a hierarchical manner.

In the foregoing description, by way of example, annotations having a hierarchical structure are recorded in the annotation recording area A, and annotations having no hierarchical structure are recorded in the annotation recording area B. However, the layer reconstruction process may be performed in a case where annotations having a hierarchical structure are recorded in each of the annotation recording areas A and B. Alternatively, the layer reconstruction process may be performed on annotations in three or more recording areas, rather than annotations in two recording areas. The layer reconstruction process described above is an example of a process for reconstructing a layer structure of a plurality of annotations, and the layer structure may be reconstructed in any other procedure. Further, the layer reconstruction process may be performed after the process for integrating annotations according to the first embodiment is performed. In the embodiment described above, the layer reconstruction process is performed on annotations in a plurality of recording areas. However, annotations recorded in one recording area and having no hierarchical structure may be organized in a hierarchical structure, based on the inclusion relationship of the regions of the annotations and the relevance of the descriptions of the annotations, as in the present embodiment. Alternatively, the layer reconstruction process according to the present embodiment may be performed on annotations in each recording area after, based on the inclusion relationship of the regions of the annotations and the relevance of the descriptions of the annotations, annotations having an inclusion relationship are formed into layers and organized in a hierarchical structure.

### Third Embodiment

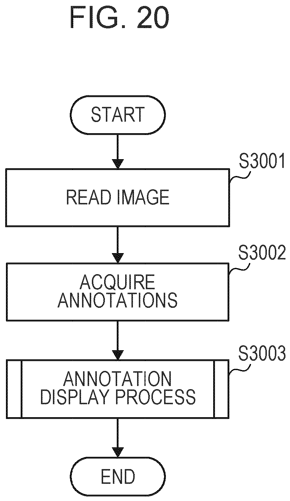

A series of operations according to a third embodiment of the present invention will be described as being performed using the digital camera 100 although the series of operation can be performed by the PC 200. That is to say that the second embodiment including the additional features, elements, units and the like may be part of and/or performed by the PC. Put another way while the second embodiment is described with reference to the digital camera, it should be understood that it applies to the PC 200. Since the configuration of the digital camera 100 is basically the same as that in the first embodiment, a description thereof will be omitted. Flowcharts illustrated in Figs. 20 to 22 are implemented by the system control unit 50A (processing unit) of the digital camera 100 controlling the units illustrated in Fig. 3 and the units of the digital camera 100 illustrated in Fig. 1 in accordance with a program read by the system control unit 50A (processing unit).

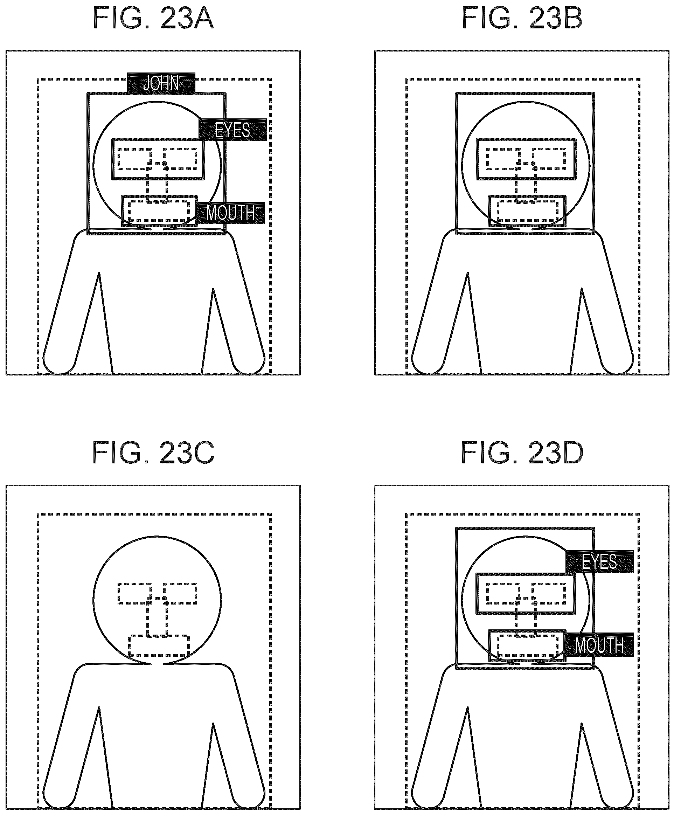

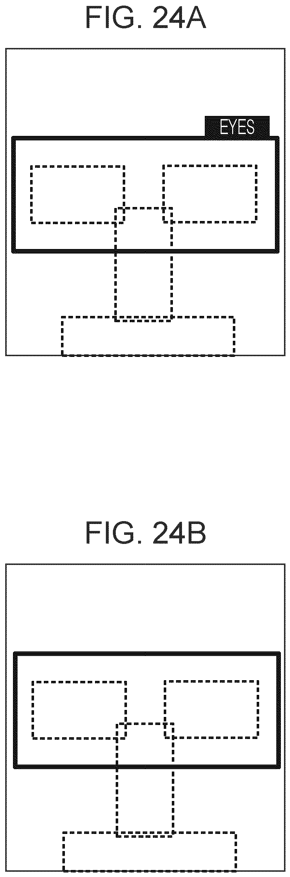

Figs. 23A to 23D, 24A, and 24B illustrate specific examples of annotations used in the description of the flowcharts illustrated in Figs. 20 to 22.

Fig. 20 is a flowchart illustrating the operation procedure of an image display process according to the third embodiment.

In step S3001, the image reading unit 300 reads an image file to be displayed.

In step S3002, the annotation acquisition unit 301 acquires annotations of the image file read in step S3001.

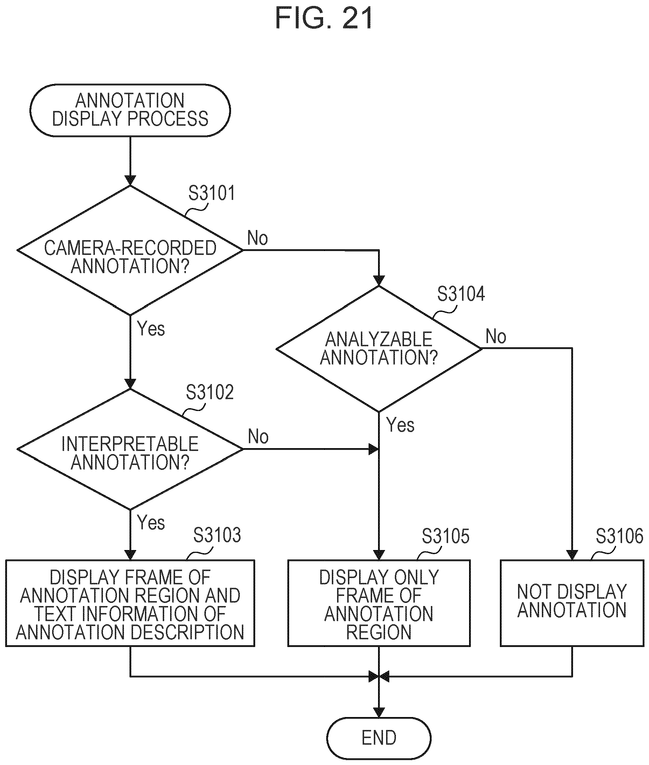

In step S3003, the image display control unit 304 displays an image, and the annotation display control unit 305 causes the display unit 23 to display the annotations acquired in step S3002. Then, the process ends. The processing of step S3003 will be described in detail with reference to Fig. 21.

Fig. 21 illustrates an annotation display process in step S3003 in Fig. 20. In the annotation display process, the process illustrated in Fig. 21 is performed on each of the annotations acquired by the annotation acquisition unit 301.

In step S3101, the annotation display control unit 305 determines whether the annotation to be processed is an annotation recorded by the digital camera 100. As described above, an annotation according to the present embodiment is recorded in the annotation recording area A 404 in a case where the annotation is recorded at the time of image capture using the digital camera 100, and is recorded in the annotation recording area B 405 in other cases. Accordingly, the annotation display control unit 305 determines that the annotation to be processed is an annotation recorded by the digital camera 100 in a case where the annotation to be processed is information recorded in the annotation recording area A 404. If the annotation to be processed is an annotation recorded by the digital camera 100, the process proceeds to step S3102. If the annotation to be processed is not an annotation recorded by the digital camera 100, or an annotation recorded by a device other than the digital camera 100, such as a PC, the process proceeds to step S3104.

In step S3102, the annotation display control unit 305 determines whether the annotation determined in step S3101 is interpretable. If the annotation is interpretable, the process proceeds to step S3103. If the annotation is not interpretable, the process proceeds to step S3105. Whether the annotation is interpretable can be determined, for example, based on whether the annotation is information recorded by the digital camera 100 in accordance with the Exif standard. The information on the image capturing device included in the image-capturing setting information is used to determine whether the annotation has been recorded by the digital camera 100. In a case where the annotation is an annotation recorded in accordance with the Exif standard, whether the annotation is interpretable may be determined based on the version of the Exif standard. Even in a case where the annotation is an annotation recorded by another camera, the annotation display control unit 305 may determine that the annotation is interpretable if the annotation is information recorded by a camera of the same manufacturer as that of the digital camera 100 or if character string information that can be analyzed is recorded.

In step S3103, as illustrated in Fig. 23A, the annotation display control unit 305 performs control to display, based on the annotation, a frame and character string information in a superimposed manner on the image. That is, the annotation display control unit 305 performs control such that a region indicated by the region of the annotation is displayed with a frame and a character string of the description of the annotation is displayed near the frame. Then, the process for the annotation to be processed ends. In a case where the operation of the operation unit 63 of the digital camera 100 is performed in the manner as illustrated in Fig. 23A to display an enlarged image on the display unit 23, the annotation display control unit 305 adjusts the display positions of the frames according to the enlarged image, and the frames are displayed in a manner as illustrated in Fig. 24A. In addition, only annotations for which the entire regions are included within the enlarged range are displayed. Fig. 24A illustrates a case where the image illustrated in Fig. 23A is displayed in enlarged view, in which the annotations representing the "eyes" are displayed since the entire regions of the annotations are included in the display range. In contrast, for the annotations representing the "mouth" and "John", only parts of the regions of the annotations are included in the display range, and thus the frames and the character string information are not displayed.

In step S3104, the annotation display control unit 305 determines whether the region information of the annotation to be processed is analyzable. For example, it is determined whether the annotations recorded in the annotation recording area A 404 are based on a standard that can be analyzed by the digital camera 100. If the region information of the annotation to be processed is analyzable, the process proceeds to step S3105, and if not, the process proceeds to step S3106.

In step S3105, as illustrated in Fig. 23B, the annotation display control unit 305 performs control to display only the frames indicated by the regions of the annotations in a superimposed manner on the image without displaying text information. Then, the process for the annotation to be processed ends. In a case where the image is displayed in enlarged view, as in step S3103, the display positions of the frames of the annotations are adjusted, and the annotations to be displayed are adjusted (only the annotations for which the entire regions are included in the display range are displayed). Thus, as a result of displaying the image illustrated in Fig. 23B in enlarged view, an image illustrated in Fig. 24B is obtained.

In step S3106, the image has no annotation recorded therein. Thus, as illustrated in Fig. 23C, the image display control unit 304 displays the image on the display unit 23, and the annotation display control unit 305 does not display an annotation. Then, the process for the annotation to be processed ends.

As in Fig. 21, the annotation display control unit 305 individually determines how each of the plurality of annotations is to be displayed. Thereafter, based on the determination results, the generation of display data of the plurality of annotations and the display of the annotations on the display unit 23 may be performed at the same time.

Figs. 23A to 23D illustrate display examples when the three annotations representing "John", the "eyes", and the "mouth" are recorded. Fig. 23A illustrates the display example when the processing of S3103 is performed on all the annotations. Fig. 23B illustrates the display example when the processing of S3105 is performed on all the annotations. Fig. 23C illustrates the display example when the processing of S3106 is performed on all the annotations. In a case where all the annotations are recorded in the same annotation recording area, the display as illustrated in Fig. 23A is provided. In a case where the annotations are recorded in a plurality of different annotation recording areas (e.g., the annotation recording area A 404 and the annotation recording area B 405), the determination results change depending on the annotation recording areas. Thus, for example, the display as illustrated in Fig. 23D may be provided. Fig. 23D illustrates the display example when the annotation representing "John" is recorded in the annotation recording area B 405 and the annotations representing the "mouth" and the "eyes" are recorded in the annotation recording area A 404 although the data of all the annotations is analyzable.

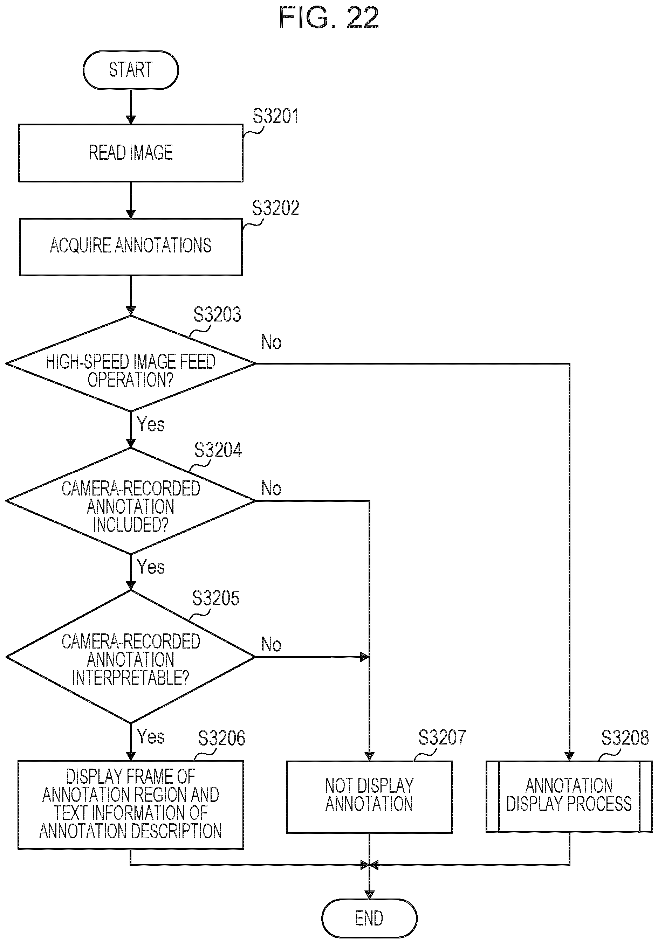

Fig. 22 illustrates a modification of the image display process. In Fig. 22, when images are continuously played back and displayed at a high speed during playback using the digital camera 100, annotations are displayed in a manner different from that of normal annotation display described with reference to Fig. 21.

Since the processing of steps S3201 and S3202 is similar to that of steps S3001 and S3002 in Fig. 20, a description thereof will be omitted.

In step S3203, the image display control unit 304 determines whether images to be displayed on the display unit 23 are being subjected to an image feed operation at a high speed through the operation unit 63 of the digital camera 100. Then, if it is determined that an image feed operation is being performed at a high speed, the process proceeds to step S3204. If it is determined that an image feed operation is not being performed at a high speed, the process proceeds to step S3208.

In step S3204, the annotation display control unit 305 determines whether the annotations acquired in step S3202 include an annotation recorded by the digital camera 100. The determination of whether the annotations include an annotation recorded by the digital camera 100 is performed using a method similar to that in step S3101. If it is determined that the annotations include an annotation recorded by the digital camera 100, the process proceeds to step S3205, and if not, the process proceeds to step S3207.

In step S3205, the annotation display control unit 305 determines whether the annotation recorded by the digital camera 100 is interpretable. The determination of whether the annotation is interpretable is performed by, as in step S3102, determining whether the annotation has been recorded by the digital camera 100, based on the information on the image capturing device included in the image-capturing setting information, or is performed based on the version of the Exif standard. In this processing, a determination operation that takes a long time is not performed to implement high-speed playback. If it is determined that the annotation is interpretable, the process proceeds to step S3206, and if not, the process proceeds to step S3207.

In step S3206, the image display control unit 304 causes the display unit 23 to display an image of the image file read in step S3201. Then, the annotation display control unit 305 performs control to display a frame indicating the region of the annotation recorded by the digital camera 100 and text information of the description of the annotation. In the present embodiment, when a plurality of annotations are present, a plurality of frames and text information are displayed based on the plurality of annotations. However, only the frame and text information of the annotation in the top layer may be displayed. Alternatively, the plurality of frames may be displayed without the display of the text information.

In step S3207, the image display control unit 304 causes the display unit 23 to display the image of the image file read in step S3201. Then, the annotation display control unit 305 performs control not to display an annotation.

In step S3208, as in step S3003, the image display control unit 304 and the annotation display control unit 305 perform the normal annotation display process described with reference to Fig. 21.

As described above, in the modification, an annotation recorded by the digital camera 100 is displayed even during high-speed playback since such information can be easily processed by the digital camera 100, whereas an annotation not recorded by the digital camera 100 is not displayed during high-speed playback since such information takes time to process for analysis or the like. Through the procedure described above, the display content is switched for an annotation recorded in an image, namely, it is determined whether to display an annotation recorded in an image, depending on the recording area or the like in which the annotation is recorded. In a case where similar annotations are included in different recording areas, the annotation recorded in one of the recording areas is displayed in a simple manner. This can improve visibility when the annotations are displayed. An annotation for which only the frame is displayed and an annotation for which both the frame and the text information are displayed in different display forms (such as colors, shapes, or line types such as a broken line and a double line) of the frames.

### Fourth Embodiment

A fourth embodiment describes a process for sorting images to which degrees of focus (hereinafter referred to as "focus rating") are assigned as annotations in an overlapping manner and displaying the images in a list view. The present embodiment describes an example of an image sorting process using focus rating values. However, any other process such as an image filtering process or an image search process may be performed, for example. Further, for example, the calorie of food in an image, the age and height of a person in an image, or the like may be handled as long as the value can be interpreted numerically, like the focus rating value. In the following, the description of the same points (e.g., the same configurations and operations) as those in the first to third embodiment will be omitted as appropriate.

A series of operations according to the present embodiment will be described as being performed by the PC 200 although the series of operation can be performed by the digital camera 100.

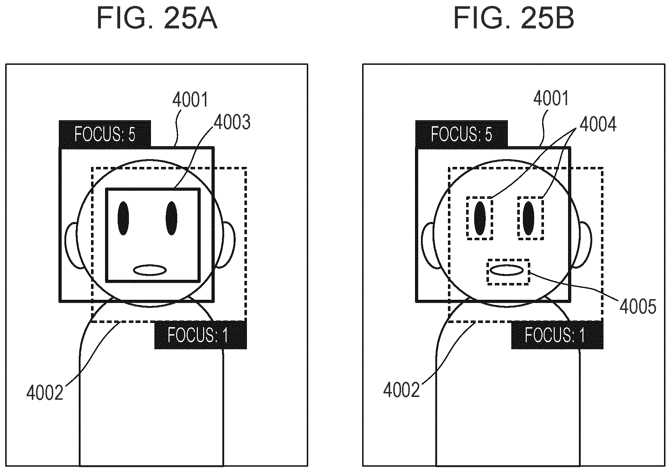

Figs. 25A and 25B are diagrams illustrating images to which overlapping focus rating values are assigned as annotations. Figs. 25A and 25B illustrate examples in which a focus rating value 4001 is assigned as an annotation by the digital camera 100 at the time of image capture and a focus rating value 4002 is assigned as an annotation by an image processing application or the like. In the example illustrated in Fig. 25A, the digital camera 100 assigns an in-focus region 4003 as autofocus information at the time of image capture. In the example illustrated in Fig. 25B, the image processing application or the like assigns eye regions 4004 and a mouth region 4005 as annotations.

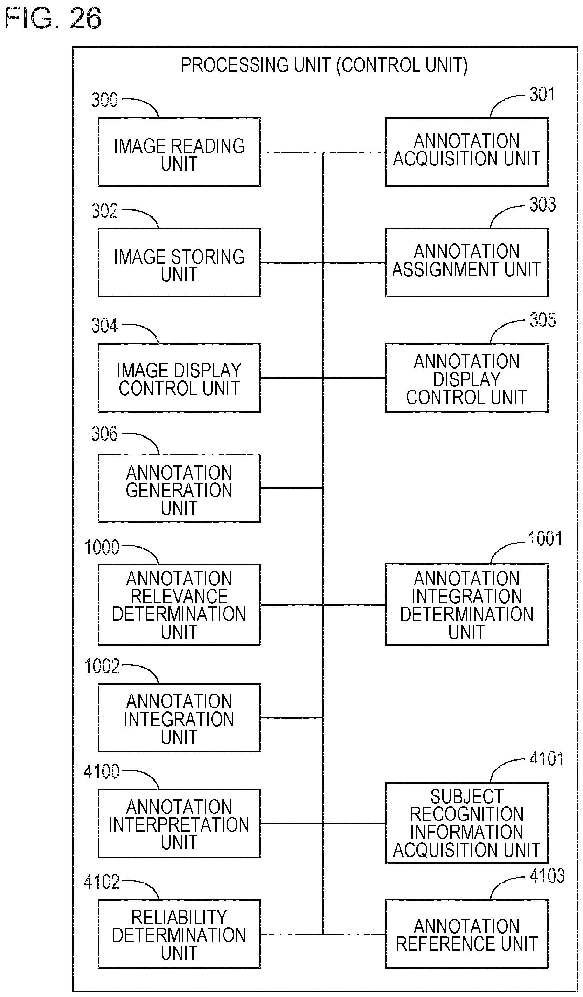

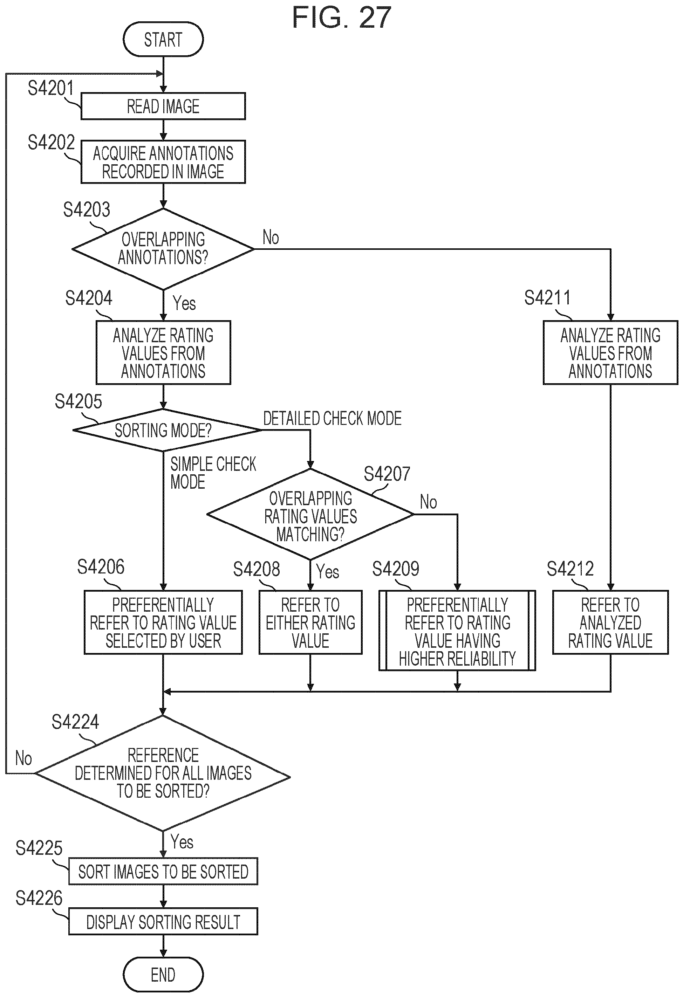

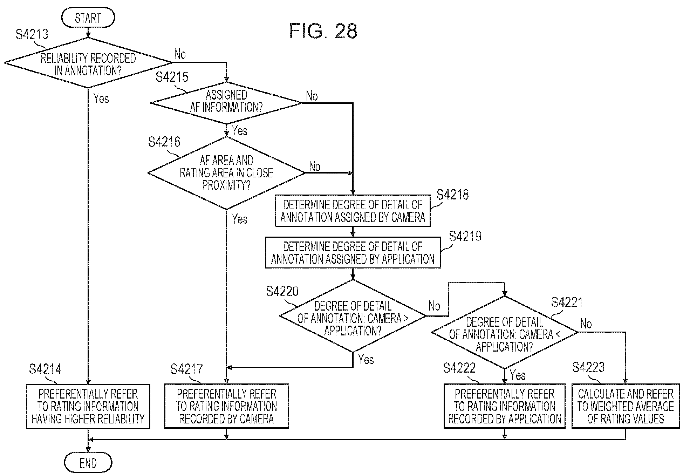

Fig. 26 is a block diagram illustrating the processing unit included in the PC 200 according to the fourth embodiment of the present invention. In the fourth embodiment, the control unit 201 (processing unit) of the PC 200 further includes units 4100 to 4103 illustrated in Fig. 26 in addition to the units illustrated in Fig. 7. The control unit 201 of the PC 200 functions as a processing unit including the units illustrated in Fig. 26 by loading a predetermined program or the like stored in the ROM 202 into a working RAM and executing the program. Flowcharts illustrated in Figs. 27 and 28 are implemented by the control unit 201 (processing unit) controlling the units illustrated in Fig. 26 and the units of the PC 200 illustrated in Fig. 2 in accordance with a program read by the control unit 201 (processing unit). The annotation relevance determination unit 1000 determines whether overlapping annotations are present.

An annotation interpretation unit 4100 determines whether an acquired annotation is interpretable as a numerical value. In the present embodiment, it is analyzed whether the annotation is in an appropriate format that can be used as a key for performing an image sorting process.

A subject recognition information acquisition unit 4101 acquires subject recognition information recorded in an image by the digital camera 100 at the time of image capture, such as autofocus information, a depth map, and sensor information such as global positioning system (GPS) information. In the present embodiment, autofocus information as indicated in the in-focus region 4003 illustrated in Fig. 25A is acquired.

A reliability determination unit 4102 determines the reliability of the annotation using reliability assigned to the annotation itself, the subject recognition information acquired by the subject recognition information acquisition unit 4101, the degree of detail of the annotation, the type of the annotation, and the like.

In the present embodiment, in a case where reliability is assigned to a target annotation, the reliability determination unit 4102 uses it to determine the reliability.

In the present embodiment, furthermore, in a case where subject recognition information is recorded in the target annotation, the reliability determination unit 4102 uses the subject recognition information to determine the reliability.

For example, the target annotation is the annotation 4001 illustrated in Fig. 25A assigned by the digital camera 100. In contrast, in a case where the autofocus information as indicated in the in-focus region 4003 illustrated in Fig. 25A, which is recorded as subject recognition information by the digital camera 100, can be acquired, the reliability determination unit 4102 determines that the reliability is high if the annotation 4001 and the in-focus region 4003 are in close proximity to each other. While the autofocus information has been described as an example of the subject recognition information, any other information such as a depth map may be used for determination.

In the present embodiment, furthermore, the degree of detail of an annotation is determined based on whether a more detailed annotation than the target annotation is assigned. For example, in a case where, like the annotation 4002 illustrated in Fig. 25B, the target annotation is assigned to a person's face, the reliability determination unit 4102 determines that the reliability is high if more detailed regions, namely, the eye regions 4004 and the mouth region 4005, are assigned.

In the present embodiment, furthermore, the type of an annotation refers to a standard under which the annotation is recorded or a person, a device, or the like that has recorded the annotation. For example, the reliability determination unit 4102 may determine that an annotation recorded by a specific person or a specific device has high reliability.

In the present embodiment, furthermore, in a case where the determination of reliability has failed even using the information described above, a new annotation is generated from overlapping annotations, and it is determined that the reliability of the generated annotation is high. For example, as in the present embodiment, in a case where focus ratings are recorded numerically as overlapping annotations for an image, a weighted average of the values of the overlapping focus ratings is calculated to generate an annotation, and the generated annotation is handled as a high-reliability annotation.

An annotation reference unit 4103 selects, based on the reliability determined by the reliability determination unit 4102, an annotation to be used for the image sorting process among the overlapping annotations. For example, an annotation determined to have high reliability by the reliability determination unit 4102 is selected as a sorting key to perform the image sorting process.

Figs. 27 and 28 are flowcharts illustrating the operation procedure of the image sorting process according to the fourth embodiment. In the image sorting process according to the fourth embodiment, a focus rating value to be used as a key for a sorting process is determined for each image before the sorting process of the images is performed.

In step S4201, the image reading unit 300 is used to read image files to be sorted.

In step S4202, the annotation acquisition unit 301 is used to acquire annotations from the images read in step S4201.

In step S4203, the annotation relevance determination unit 1000 is used to determine whether the annotations acquired in step S4202 include overlapping annotations. If the annotations include overlapping annotations, the process proceeds to step S4204. If the annotations do not include overlapping annotations, the process proceeds to step S4211.

In step S4204, the annotation interpretation unit 4100 is used to analyze the focus rating values from the overlapping annotations determined in step S4203.

In step S4205, the control unit 201 determines whether to perform the sorting process in a simple check mode or in a detailed check mode when sorting the images. The simple check mode is a mode in which the sorting process is performed by referring to any one of the overlapping focus rating values. The detailed check mode is a mode in which the sorting process is performed using a plurality of kinds of focus rating values among the overlapping focus rating values. It is assumed that the user who operates the image processing apparatus according to the present embodiment has selected either the simple check mode or the detailed check mode in advance before giving an instruction to start the sorting process. It is also assumed that, when selecting the simple check mode, the user selects in advance which focus rating value to give priority to among the overlapping focus rating values. If the user has selected the simple check mode, the process proceeds to step S4206. If the user has selected the detailed check mode, the process proceeds to step S4207.

In step S4206, the control unit 201 refers to the focus rating value selected by the user in step S4205 among the overlapping focus rating values as a key for the sorting process.

In step S4207, the control unit 201 determines whether the overlapping focus rating values match. If the overlapping focus rating values match, the process proceeds to step S4208. If the overlapping focus rating values do not match, the process proceeds to step S4209.

In step S4208, the control unit 201 refers to any one of the focus rating values that match among the overlapping focus rating values as a key for the sorting process.

In step S4209, the reliability determination unit 4102 is used to refer to a focus rating value having higher reliability among the overlapping focus rating values as a key for the sorting process. The method for determining the reliability will be described with reference to steps S4213 to S4223 described below.

In step S4211, the annotation interpretation unit 4100 is used to analyze a focus rating value from the annotations determined in step S4203.

In step S4212, the control unit 201 refers to the focus rating value analyzed in step S4211 as a key for the sorting process.

In step S4213, the reliability determination unit 4102 is used to determine, for each of the overlapping annotations, whether the reliability is recorded in the annotation itself. If the reliability is recorded in the annotation itself, the process proceeds to step S4214. If the reliability is not recorded in the annotation itself, the process proceeds to step S4215.

In step S4214, the reliability determination unit 4102 is used to refer to the reliability recorded in the annotation itself among the overlapping annotations. A focus rating value written in an annotation having high reliability is referenced as a key for the sorting process.

In step S4215, the reliability determination unit 4102 is used to determine whether the overlapping annotations include an annotation assigned autofocus information. If an annotation assigned autofocus information is present, the process proceeds to step S4216. If an annotation assigned autofocus information is not present, the process proceeds to step S4218.

In step S4216, the reliability determination unit 4102 is used to determine whether the region indicated by the autofocus information and the region of the corresponding annotation are in close proximity to each other. If the regions are in close proximity to each other, the process proceeds to step S4217. If the regions are not in close proximity to each other, the process proceeds to step S4218.

In step S4217, the reliability determination unit 4102 is used to determine that the reliability of the annotation recorded by the digital camera 100 is high, and the focus rating value recorded in the annotation is referenced as a key for the sorting process.

In step S4218, the reliability determination unit 4102 is used to determine the degree of detail of the annotation assigned by the digital camera 100.

In step S4219, the reliability determination unit 4102 is used to determine the degree of detail of the annotation assigned by the image processing application or the like.

In step S4220, the reliability determination unit 4102 is used to determine whether the degree of detail of the annotation assigned by the digital camera 100 is higher than the degree of detail of the annotation assigned by the image processing application or the like. If the degree of detail of the annotation assigned by the digital camera 100 is higher, the process proceeds to step S4217. If the degree of detail of the annotation assigned by the digital camera 100 is lower, the process proceeds to step S4221.

In step S4221, the reliability determination unit 4102 is used to determine whether the degree of detail of the annotation assigned by the image processing application or the like is higher than the degree of detail of the annotation assigned by the digital camera 100. If the degree of detail of the annotation assigned by the image processing application or the like is higher, the process proceeds to step S4222. If the degree of detail of the annotation assigned by the image processing application or the like is lower, the process proceeds to step S4223.

In step S4222, the reliability determination unit 4102 is used to determine that the reliability of the annotation recorded by the image processing application or the like is high, and the focus rating value recorded in the annotation is referenced as a key for the sorting process.

In step S4223, the reliability determination unit 4102 is used to determine that the determination of the reliability has failed. Then, a weighted average of the respective rating values recorded in the overlapping annotations is calculated, and the calculated weighted average is referenced as a key for the sorting process.

In step S4224, the control unit 201 performs the processing of steps S4201 to S4223 on all the image files to be sorted to determine whether the rating value to be referenced has been determined. If the rating value to be referenced has been determined for all the image files to be sorted, the process proceeds to step S4225. If there is any image file for which the rating value to be referenced has not yet been determined, the process returns to step S4201, and the control unit 201 performs the processing of steps S4201 to S4223 on the image file for which the rating value to be referenced has not yet been determined among the image files to be sorted.

In step S4225, the control unit 201 sorts the image files to be sorted under a condition determined by the user. The sorting of the images files is performed using, as a key, the information determined to be referenced for each image file through the processing of steps S4201 to S4223 among the various types of information included in the image file.

In step S4226, the image display control unit 304 displays the sorting result on the display unit 206. The sorting result may displayed such that the plurality of images are displayed in a list view or one image is displayed and an image feed operation is performed to display the sorted images (images found as a result of the search) in sequence. Further, the annotation display control unit 305 is used to display, on the display unit 206, the annotation determined by the reliability determination unit 4102.

According to the present embodiment, when images to which focus rating values are assigned as annotations in an overlapping manner are to be sorted on a thumbnail screen or the like of an image display application, a value to be referenced as a key for the sorting process can be determined before the sorting process is performed.

### Fifth Embodiment

The fourth embodiment described above describes an example in which images to which focus rating values are assigned as annotations in an overlapping manner are sorted on a thumbnail screen or the like of an image display application. A fifth embodiment describes an example in which images to which words representing a subject are assigned as annotations in an overlapping manner are filtered on a thumbnail screen or the like of an image display application. The present embodiment describes an example of an image filtering process. However, any other process such as an image search process may be performed, for example. Since the fundamental configuration of the present embodiment is the same as that of the fourth embodiment, a description thereof will be omitted.

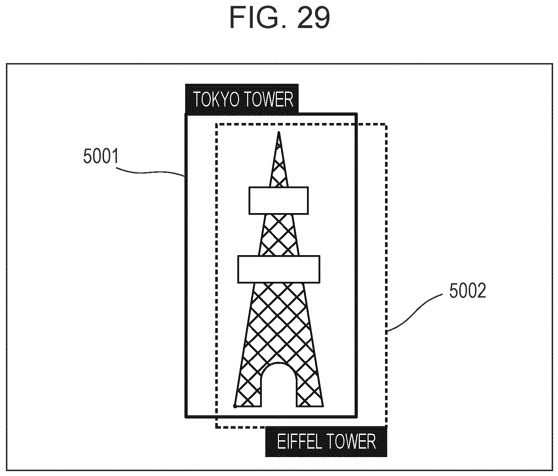

Fig. 29 is a diagram illustrating an image to which overlapping words are assigned as annotations. Fig. 29 illustrates an example in which a subject name 5001 is assigned as an annotation by the digital camera 100 at the time of image capture and a subject name 5002 is assigned as an annotation by an image processing application or the like. In Fig. 29, a captured image of the "Tokyo Tower" is assigned the subject name 5001, which is a correct subject name ("Tokyo Tower"), and the subject name 5002, which is an incorrect subject name ("Eiffel Tower").

When a plurality of images including the image as illustrated in Fig. 29 are to be filtered on a thumbnail screen or the like of an image display application, if the user filters an image of the "Eiffel Tower", the image illustrated in Fig. 29, which is an image of the Tokyo Tower, matches the result of filtering by mistake.

A method for using a correct one of the overlapping subject names as a key for the filtering process will be described with reference to Figs. 26, 30, and 31.

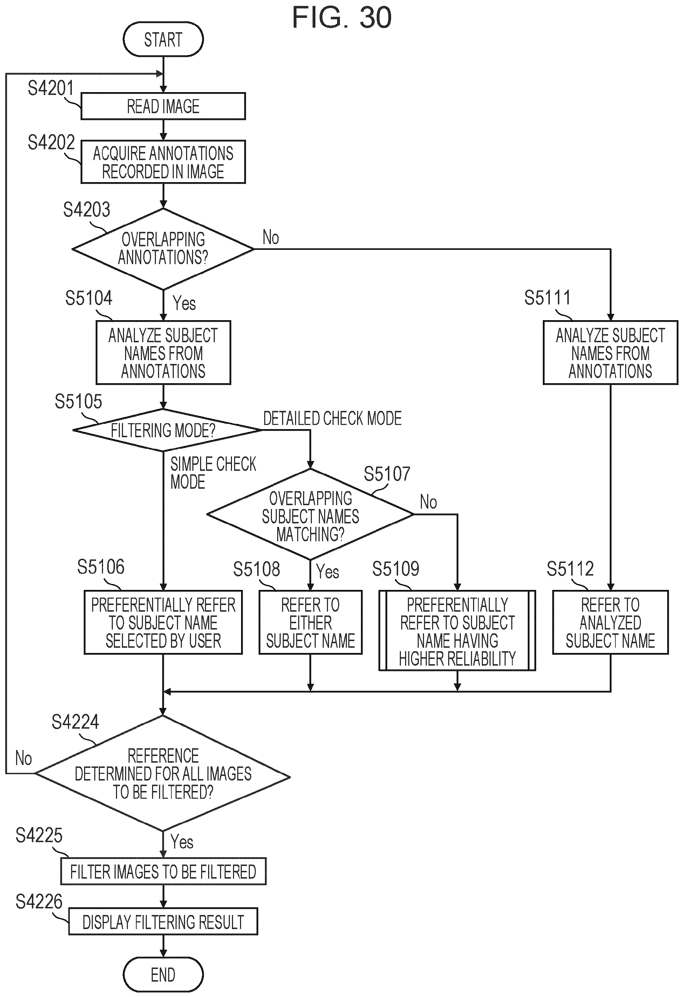

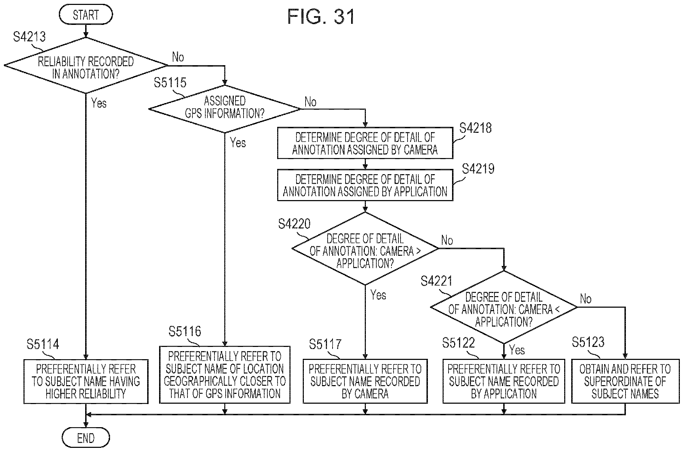

Fig. 26 is a diagram illustrating the processing unit included in the PC 200 according to the fifth embodiment of the present invention. In the fifth embodiment, the control unit 201 (processing unit) of the PC 200 includes the units illustrated in Fig. 26. The control unit 201 of the PC 200 functions as a processing unit including the units illustrated in Fig. 26 by loading a predetermined program or the like stored in the ROM 202 into a working RAM and executing the program. Flowcharts illustrated in Figs. 30 and 31 are implemented by the control unit 201 (processing unit) controlling the units illustrated in Fig. 26 and the units of the PC 200 illustrated in Fig. 2 in accordance with a program read by the control unit (processing unit).

Of the units illustrated in Fig. 26, the units that perform the same processing as that in the fourth embodiment will not be described, and the units that perform different processing from that in the fourth embodiment will mainly be described.

An annotation interpretation unit 4100 determines whether an acquired annotation is interpretable as a subject name. In the present embodiment, it is analyzed whether the annotation is in an appropriate format that can be used as a key for performing an image filtering process.

A subject recognition information acquisition unit 4101 acquires subject recognition information recorded in an image recorded by the digital camera 100 at the time of image capture, such as autofocus information, a depth map, and sensor information such as GPS information. In the present embodiment, the subject recognition information acquisition unit 4101 acquires GPS information at the time of image capture.

A reliability determination unit 4102 determines the reliability of the annotation using reliability assigned to the annotation itself, the subject recognition information acquired by the subject recognition information acquisition unit 4101, the degree of detail of the annotation, the type of the annotation, and the like.

In the present embodiment, in a case where subject recognition information is recorded in the target annotation, the reliability determination unit 4102 uses the subject recognition information to determine the reliability.

For example, GPS information at the time of image capture is acquired by the subject recognition information acquisition unit 4101, and the annotation corresponding to one of the subject names 5001 and 5002 illustrated in Fig. 29 that represents a location geographically closer to the location indicated by the GPS information at the time of image capture is determined to have high reliability.

Furthermore, the degree of detail of an annotation may be determined by using the subject name assigned to the target annotation, based on whether a more detailed subject name is assigned. For example, when an annotation simply assigned the name "building" and an annotation assigned a building name such as "Tokyo Tower" overlap, the annotation assigned the building name, which is a more detailed subject name, may be determined to have high reliability.

In the present embodiment, furthermore, in a case where the determination of reliability has failed even using the information described above, a new annotation is generated from overlapping annotations, and it is determined that the reliability of the generated annotation is high. For example, consideration is given to a case where the same subject is assigned different subject names (e.g., a case where an image of the "Tokyo Tower" is assigned the annotations "Tokyo Tower" and "Eiffel Tower"). In this case, the superordinate of the overlapping subject names (the superordinate of "Tokyo Tower" and "Eiffel Tower", namely, "tower") is obtained and handled as an annotation having high reliability.

An annotation reference unit 4103 refers to, based on the reliability determined by the reliability determination unit 4102, an annotation to be used for the image filtering process among the overlapping annotations before the filtering process is performed. Both an annotation having high reliability and an annotation having low reliability may be referenced and displayed such that the user can understand the levels of reliability of the annotations.

Figs. 30 and 31 are flowcharts illustrating the operation procedure of the filtering process according to the fifth embodiment. In the image filtering process according to the present embodiment, a subject name to be used as a key for a filtering process is determined for each image. Processing similar to that of the steps described with reference to Figs. 27 and 28 is denoted by the same reference numerals as those illustrated in Figs. 27 and 28, and a description thereof will be omitted as appropriate. Processing that is not the same as that in Figs. 27 and 28, but where the sorting process illustrated in Figs. 27 and 28 is replaced with the filtering process, will be described with the same step number.

In step S5104, the annotation interpretation unit 4100 is used to analyze the subject names from the overlapping annotations determined in step S4203.

In step S5105, the control unit 201 determines whether to perform the filtering process in a simple check mode or in a detailed check mode when filtering the images. The simple check mode is a mode in which the filtering process is performed by referring to any one of the overlapping subject names. The detailed check mode is a mode in which the filtering process is performed using a plurality of kinds of subject names among the overlapping subject names. It is assumed that the user who operates the image processing apparatus according to the present embodiment has selected either the simple check mode or the detailed check mode in advance before giving an instruction to start the filtering process. It is also assumed that, when selecting the simple check mode, the user selects in advance which subject name to give priority to among the overlapping subject names. If the user has selected the simple check mode, the process proceeds to step S5106. If the user has selected the detailed check mode, the process proceeds to step S5107.

In step S5106, the control unit 201 refers to the subject name selected by the user in step S5105 among the overlapping subject names as a key for the filtering process.

In step S5107, the control unit 201 determines whether the overlapping subject names match. If the overlapping subject names match, the process proceeds to step S5108. If the overlapping subject names do not match, the process proceeds to step S5109.

In step S5108, the control unit 201 refers to any one of the subject names that match among the overlapping subject names as a key for the filtering process.

In step S5109, the reliability determination unit 4102 is used to refer to a subject name having higher reliability among the overlapping subject names as a key for the filtering process. The method for determining the reliability will be described with reference to steps S4213 to S5123 in Fig. 31 described below.

In step S5111, the annotation interpretation unit 4100 is used to analyze a subject name from the annotations determined in step S4203.

In step S5112, the control unit 201 refers to the subject name analyzed in step S5111 as a key for the filtering process.

In step S5114, the reliability determination unit 4102 is used to refer to the reliability recorded in the annotation itself among the overlapping annotations. A subject name written in an annotation having high reliability is referenced as a key for the filtering process.

In step S5115, the reliability determination unit 4102 is used to determine whether the overlapping annotations are assigned GPS information. If the overlapping annotations are assigned GPS information, the process proceeds to step S5116. If no GPS information is assigned, the process proceeds to step S4218.

In step S5116, the reliability determination unit 4102 is used to determine that a subject name (e.g., annotation) representing a location geographically closer to the location indicated by the GPS information among the overlapping annotations has higher reliability, and refers to the subject name as a key for the filtering process.

In step S5117, the reliability determination unit 4102 is used to determine that the reliability of the annotation recorded by the digital camera 100 is high, and the subject name recorded in the annotation is referenced as a key for the filtering process.

In step S5122, the reliability determination unit 4102 is used to determine that the reliability of the annotation recorded by the image processing application or the like is high, and the subject name recorded in the annotation is referenced as a key for the filtering process.

In step S5123, the reliability determination unit 4102 is used to determine that the determination of the reliability has failed. Then, a subject name representing the superordinate of the subject names recorded in the overlapping annotations is obtained and referenced as a key for the filtering process.

In step S4224, the control unit 201 performs the processing of steps S4201 to S4221 and S5104 to S5123 on all the image files to be filtered to determine whether the reference (the key for the filtering process) has been determined. If the reference has been determined for all the image files to be filtered, the process proceeds to step S4225. If there is any image file for which the reference has not yet been determined, the process returns to step S4201, and the control unit 201 performs the processing of steps S4201 to S4221 and S5104 to S5123 on the image file for which the reference (key for the filtering process) has not yet been determined among the image files to be filtered.

In step S4225, the control unit 201 filters the image files to be filtered under a condition determined by the user. The filtering of the images files is performed using, as a key, the information determined to be referenced among the various types of information included in the image files.

In step S4226, the image display control unit 304 displays the filtering result on the display unit 206. The filtering result may displayed such that the plurality of images are displayed in a list view or one image is displayed and an image feed operation is performed to display the filtered images in sequence.

According to the present embodiment, when images to which subject names are assigned as annotations in an overlapping manner are to be filtered on a thumbnail screen or the like of an image display application, a subject name to be referenced as a key for the filtering process can be determined before the filtering process is performed.

### Other Embodiments

While the present invention has been described in detail with reference to embodiments thereof, the present invention is not limited to these specific embodiments and may be modified in various ways without departing from the scope of the invention. Such modifications also fall within the scope of the present invention. The embodiments described above are examples used in understanding the present invention, and may be used in any combination. Each of the embodiments of the present disclosure can be implemented solely or as a combination of a plurality of the embodiments. Each feature or element of each embodiment of the present disclosure can be implemented as a combination of elements or features of a single embodiment.

The present invention may also be implemented by performing the following processing. That is, in the processing, software (program) for implementing the functions of the embodiments described above is supplied to a system or an apparatus via a network or various storage media, and a computer (or a CPU, a micro processing unit (MPU), or the like) of the system or the apparatus reads and executes the program code. In this case, the program and a storage medium storing the program are considered embodiments of the present invention.

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited solely to the disclosed embodiments. The scope of the following claims is to be accorded the broadest interpretation so as to encompass all such modifications and equivalent structures and functions as will be understood by the skilled person.

## Claims

1. An image processing apparatus (100, 200) comprising:
acquisition means (50A, 201, 300, 301) configured to acquire an image file including a plurality of annotations;
determination means (50A, 201, 1000) configured to determine a relevance between the plurality of annotations; and
control means (50A, 201, 1002) configured to perform control to integrate annotations determined to be relevant by the determination means among the plurality of annotations into an integrated annotation and output the integrated annotation.

2. The image processing apparatus according to Claim 1, wherein
each of the plurality of annotations includes character string information and region information, and
the determination means is configured to determine the relevance based on the character string information and the region information.

3. The image processing apparatus according to Claim 2, wherein the determination means is configured to determine that annotations having the same character string information among the plurality of annotations are relevant.

4. The image processing apparatus according to Claim 2 or 3, wherein the determination means is configured to determine that annotations that are relevant in terms of the character string information and for which regions indicated by the region information overlap among the plurality of annotations are relevant.

5. The image processing apparatus according to Claim 4, wherein the determination means is configured to determine that annotations for which the regions indicated by the region information overlap by an amount greater than or equal to a predetermined amount among the plurality of annotations are relevant.

6. The image processing apparatus according to any one of Claims 1 to 5, further comprising
second determination means (201) configured to determine metadata recording areas in which the plurality of annotations are recorded in the image file, wherein
the control means is configured to perform control to integrate annotations determined to be recorded in different metadata recording areas by the second determination means among the plurality of annotations into an integrated annotation and output the integrated annotation.

7. The image processing apparatus according to any one of Claims 1 to 6, wherein the control means is configured to perform control to output an annotation into which annotations determined to be relevant among the plurality of annotations included in the image file are integrated and an annotation that is not integrated among the plurality of annotations.

8. The image processing apparatus according to Claim 7, wherein the control means is configured to perform control to display an annotation into which annotations determined to be relevant among the plurality of annotations included in the image file are integrated and an annotation that is not integrated among the plurality of annotations, together with image data of the image file.

9. The image processing apparatus according to Claim 8, wherein the control means is configured to perform control to display the annotation into which the annotations are integrated and the annotation that is not integrated, in different display forms.

10. The image processing apparatus according to any one of Claims 7 to 9, wherein the control means is configured to perform control to generate an image file and output the generated image file, the image file including an annotation into which annotations determined to be relevant among the plurality of annotations included in the image file are integrated and an annotation that is not integrated among the plurality of annotations.

11. A method for controlling an image processing apparatus, comprising:
an acquisition step (S1001) of acquiring an image file including a plurality of annotations;
a determination step (S1003) of determining a relevance between the plurality of annotations; and
a control step (S1006, S1007) of performing control to integrate annotations determined to be relevant in the determination step among the plurality of annotations into an integrated annotation and output the integrated annotation.

12. A computer-readable storage medium storing a program that causes a computer to function as the image processing apparatus according to any one of Claims 1 to 10.

13. A computer program comprising instructions which, when executed by a computer, cause the computer to function as the image processing apparatus according to any one of Claims 1 to 10.
